# EUROPÄISCHE PATENTSCHRIFT

(11) **EP 2 238 369 B1**
(45) Veröffentlichungstag und Bekanntmachung des Hinweises auf die Patenterteilung: **31.08.2011**
(21) Anmeldenummer: 08866898.3
(22) Anmeldetag: 21.12.2008
(51) Int. Cl.: F16H 55/14, F16H 55/18, F16H 57/00

(54) **RASSELFREIE BAUTEILPAARUNG**
RATTLE-FREE STRUCTURE OF MATED PARTS
ASSEMBLAGE DE COMPOSANTS SANS CLIQUETIS

(30) Priorität: 27.12.2007 DE 102007063524; 07.08.2008 DE 202008010745 U
(43) Veröffentlichungstag der Anmeldung: 13.10.2010
(73) Patentinhaber: GETRAG Getriebe- und Zahnradfabrik Hermann Hagenmeyer GmbH & Cie KG, 74199 Untergruppenbach (DE)
(72) Erfinder: LANG, Claus-Hermann, 88213 Ravensburg (DE)
(74) Vertreter: Witte, Weller & Partner
(86) Internationale Anmeldenummer: PCT/EP2008/010988
(87) Internationale Veröffentlichungsnummer: WO 2009/083208

(56) Entgegenhaltungen:
- DE-A1- 4 329 851
- FR-A- 2 808 857
- US-A- 4 519 264
- US-A- 4 881 422

## Beschreibung

Die vorliegende Erfindung betrifft eine mechanische Bauteilpaarung aus einem ersten Bauteil mit einer ersten Bauteilverzahnung und einem zweiten Bauteil mit einer zweiten Bauteilverzahnung, die mit der ersten Bauteilverzahnung in Eingriff steht, um über die Bauteilverzahnungen eine Antriebskraft in einer Antriebsrichtung übertragen zu können, entsprechend dem Oberbegrift des Anspruchs 1, und wie sie aus der FR2808857A bekannt ist.

Derartige Bauteilpaarungen sind allgemein bekannt, beispielsweise in Form von Zahnradpaarungen und/oder der Paarung einer Zahnstange mit einem Zahnrad. Solche Bauteilpaarungen werden häufig in Antriebssträngen von Kraftfahrzeugen eingesetzt, beispielsweise in Stufengetrieben, in Antrieben für Nebenaggregate etc.

Eines der Hauptprobleme bei derartigen mechanischen Bauteilpaarungen ist das so genannte Rasselphänomen. Dieses tritt hauptsächlich aufgrund von Schwingungsanregungen im Antriebsstrang auf, die beispielsweise von einem Antriebsmotor wie einem Verbrennungsmotor des Antriebsstranges erzeugt werden. Das Rasseln (auch als unsympathische Schwingungen bezeichnet) entsteht dadurch, dass sich aufgrund der Schwingungsanregung das antreibende Bauteil verzögert, das angetriebene Bauteil (z.B. ein Losrad) sich aber mit einer eingeprägten Umlaufbewegung weiterdreht und nur durch Reibungs- und Schleppmomenteffekte verzögert wird. Dabei löst sich das angetriebene Bauteil von einer Zugflanke des Antriebsbauteils, um zur Schubflanke des Antriebsbauteils hin zu schwingen und gegebenenfalls dort anzustoßen. Derartige Phänomene treten nicht nur bei Lastwechselreaktionen auf, sondern insbesondere aufgrund der höherfrequenten Anregungen aus anderen Teilen des Antriebsstranges, wie beispielsweise einem Verbrennungsmotor.

Zur Verringerung von solchen Geräuschen gibt es mehrere Ansätze. Zum einen können aktive getriebeexterne Maßnahmen vorgesehen werden, die beispielsweise die Störanregung aus einem Verbrennungsmotor durch ein Zweimassen-Schwungrad entkoppeln. Derartige Zweimassen-Schwungräder sind jedoch aufwändig hinsichtlich des beanspruchten Bauraumes, des notwendigen Zusatzgewichtes und hinsichtlich der Kosten. Eine weitere Möglichkeit sind passive getriebeexterne Maßnahmen, wie etwa Kapselungen oder Dämmungen des Getriebegehäuses. Auch diese Maßnahmen sind ungünstig. Ferner sind aktive getriebeinterne Maßnahmen bekannt, die gezielt an den Hauptgeräuschquellen angeordnet werden. Solche aktiven getriebeinternen Maßnahmen zielen häufig darauf ab, die funktionsbedingten Spiele zu minimieren bzw. die Beweglichkeit innerhalb dieser funktionsbedingten Spiele zu behindern. Nachteilig hierbei sind häufig der verringerte Wirkungsgrad und die Erzeugung anderer unerwünschter Geräusche (wie z.B. Heulen). Ferner ist es bekannt, zur Geräuschverringerung passive getriebeinterne Maßnahmen vorzusehen, die direkt an den Geräuschquellen (also beispielsweise an den Zahnrädern) angeordnet sind und mechanische Schwingungen tilgen oder isolieren.

Bekannte Maßnahmen hierbei sind Losradbremsen, Maßnahmen zur Zahnlückenverspannung, Maßnahmen, bei denen eine Scheibe mit einer etwas anderen Übersetzung verwendet wird, Maßnahmen mit einer Reibrad-Nebenübersetzung, Schwingungstilger, magnetische Lösungen zum Verhindern eines Lösens der Zahnflanken voneinander, etc.

Beispielsweise ist aus dem Dokument DE 103 28 482 A1 ein Zahnradgetriebe mit einer Antirasseleinrichtung bekannt. Dabei ist einem Losrad und einem Festrad jeweils ein Reibrad zugeordnet, die in Reibeingriff zueinander stehen.

Aus dem Dokument DE 197 21 851 A1 ist es bekannt, das Zahnflankenspiel in einer Zahnradpaarung zu verringern, indem an dem einen Zahnrad eine Zahnscheibe mit geringfügig verbiegbaren Zähnen angebracht wird. Die verbiegbaren Zähne der Zahnscheibe greifen in die Gegenverzahnung der Zahnradpaarung und sollen für eine Geräuschdämpfung ohne nennenswerten Verschleiß an dem anderen Zahnradelement sorgen.

Aus der DE 38 39 807 C1 ist es bekannt, das Zahnflankenspiel zwischen zwei Zahnrädern aufzuheben, indem an einem Zahnrad eine zusätzliche Zahnscheibe vorgesehen wird und indem die Zahnscheibe gegenüber dem zugeordneten Zahnrad durch Federn in Umfangsrichtung vorgespannt wird.

Ferner offenbart das Dokument DE 10 2004 008 171 A1 einen Stirnradtrieb für Nockenwellen, bei dem ein Zahnrad zweiteilig ausgebildet ist.

Aus dem Stand der Technik sind ferner Antirasselmaßnahmen bekannt (z.B. DE 1 967 959 A1, JP 62228735 A, US-B-4,577,525), bei denen eine Antirasselverzahnung eines Antirasselbauteils einen Zahn mehr oder weniger hat als die Bauteilverzahnung des zugeordneten Bauteils.

Das Dokument JP 01153865 A offenbart eine Anordnung mit einer Bauteilpaarung und einem zugeordneten Antirasselbauteil, wobei die Antirasselverzahnung des Bauteils, mit dem das Antirasselbauteil in Eingriff steht, einen anderen Schrägungswinkel aufweist als dessen Bauteilverzahnung.

Vor dem obigen Hintergrund ist es die Aufgabe der Erfindung, eine mechanische Bauteilpaarung anzugeben, mit der sich eine effektive Geräuschverringerung realisieren lässt und die einen hohen Wirkungsgrad besitzt.

Diese Aufgabe wird gemäß einem ersten Aspekt der Erfindung gelöst durch eine Bauteilpaarung aus einem ersten Bauteil mit einer ersten Bauteilverzahnung und einem zweiten Bauteil mit einer zweiten Bauteilverzahnung, die mit der ersten Bauteilverzahnung in Eingriff steht, um über die Bauteilverzahnungen eine Antriebskraft in einer Antriebsrichtung übertragen zu können, wobei dem ersten Bauteil ferner eine erste Antirasselverzahnung zugeordnet ist, wobei an dem zweiten Bauteil ein Antirasselbauteil befestigt ist, das gegenüber dem zweiten Bauteil in Antriebsrichtung versetzbar gelagert ist und eine zweite Antirasselverzahnung aufweist, die mit der ersten Antirasselverzahnung in Eingriff steht, und wobei dem zweiten Bauteil und dem Antirasselbauteil jeweils ein Reibabschnitt zugeordnet ist, die in Reibeingriff miteinander stehen.

Die Bauteilpaarung kann eine Zahnradpaarung sein. In diesem Fall ist die Antriebsrichtung eine in Umfangsrichtung des antreibenden Zahnrades gerichtete Antriebsrichtung. In diesem Fall kann man ein Bauteil als geteiltes Rad auffassen, wobei ein Teil für die Lastübertragung verantwortlich ist und der andere Teil (Antirasselbauteil) für die Dämpfung von störenden Anregungen und/oder für Spielfreiheit sorgen kann. Die Bauteilpaarung kann jedoch auch eine Kombination aus einer Zahnstange und einem Zahnrad sein, wobei die Antriebsrichtung im Wesentlichen linear verläuft.

Dadurch, dass das zweite Bauteil und das Antirasselbauteil in Reibeingriff miteinander stehen, wird das Antirasselbauteil von dem zweiten Bauteil im stationären Zustand mitgenommen, ohne dass wirkungsgradverringernde Verspannungseffekte auftreten. Im Falle einer Schwingungsanregung kann, ausgehend aus dem stationären Zustand, sich die Zugflanke (auch als Vorderflanke oder als arbeitende Flanke bezeichenbar) des antreibenden Bauteils von einer Schubflanke (auch als Rückflanke oder als nicht arbeitende Flanke bezeichenbar) des angetriebenen Bauteils lösen und sogar bis zur gegenüberliegenden Flanke umschlagen (aufgrund des generell vorhandenen Zahnflankenspiels zwischen den Bauteilverzahnungen). Die Relativbewegung zwischen den zwei Bauteilen wird dabei mittels des Antirasselbauteils bzw. des Reibeingriffes zwischen dem Antirasselbauteil und dem zweiten Bauteil verzögert bzw. gedämpft.

Die erfindungsgemäße Bauteilpaarung ist ferner in beiden Antriebsrichtungen (also bei Zahnrädern beispielsweise in beiden Drehrichtungen) wirksam. Ferner ist die erfindungsgemäße Bauteilpaarung sowohl bei gerad- als auch bei schrägverzahnten Bauteilverzahnungen anwendbar.

Die Antirasselverzahnungen können hinsichtlich der Zahnformen identisch oder ähnlich aufgebaut sein wie die Bauteilverzahnungen (z.B. als Evolventen). Die Antirasselverzahnungen können jedoch auch eine beliebige andere Form besitzen, wobei es bevorzugt ist, wenn die Antirasselverzahnungen punkt- oder linienförmig aneinander angreifen. Besonders bevorzugt ist es, wenn die Antirasselverzahnungen punkt- oder linienförmig auf der Höhe des Wälzkreises miteinander in Eingriff stehen.

Dabei ist das Zahnflanken- bzw. Umfangsspiel zwischen den Antirasselverzahnungen vorzugsweise geringer als das Zahnflanken- bzw. Umfangsspiel zwischen den Bauteilverzahnungen. Wenn das Zahnflankenspiel zwischen den Antirasselverzahnungen größer Null ist, kann hierdurch erreicht werden, dass bei einer Verzögerung des antreibenden Bauteils zunächst die zweite Antirasselverzahnung umschlägt (aufgrund des kleineren Zahnflankenspiels). Während des weiteren Verlaufes der Bewegung des antreibenden Bauteils in Richtung zur Gegenflanke wird diese Bewegung dann aufgrund des Reibeingriffes zwischen dem zweiten Bauteil und dem Antirasselbauteil verzögert. Hierdurch kann erreicht werden, dass das zweite Bauteil beim Umschlagen nicht oder jedenfalls mit einer geringeren Relativgeschwindigkeit auf das erste Bauteil umschlägt. Da die Antirasselverzahnungen hierbei im normalen Betrieb, also beispielsweise unter Zug oder Schub, nicht ständig miteinander in Eingriff stehen bzw. vorzugsweise nicht gegeneinander verspannt sind, wird durch die Antirasselmaßnahmen gemäß der vorliegenden Erfindung auch kein sekundäres tonales Geräusch erzeugt, wie z.B. Heulen.

Das Zahnflankenspiel zwischen den Antirasselverzahnungen kann jedoch auch Null sein, so dass ein Zwei-Flanken-Wälzkontakt erzielt wird.

Bei der erfindungsgemäßen Bauteilpaarung ist es generell irrelevant, ob das erste oder das zweite Bauteil das antreibende Bauteil ist. Bevorzugt ist das Antirasselbauteil jedoch mit einem Festrad (also einem Zahnrad, das fest mit einer Drehwelle verbunden ist) verbunden, da das hiermit in Eingriff stehende Losrad häufig durch Schaltkupplungen (Synchronisierungen etc.) verbaut ist, so dass das Antirasselbauteil dort nicht oder nur mit größerem Aufwand angebracht werden kann.

Ferner versteht sich, dass einem Bauteil wie einem Zahnrad auch zwei oder mehr Antirasselbauteile zugeordnet sein können, beispielsweise auf axial gegenüberliegenden Seiten eines Zahnrades. Dies ist insbesondere dann bevorzugt, wenn das zweite Bauteil mit mehr als einem ersten Bauteil in Eingriff steht. Dabei kann jedes Antirasselbauteil auf die spezielle Verzahnung mit einem ersten Bauteil abgestimmt werden.

Zur Terminologie ist dabei Folgendes anzumerken. Wenn irgendeine Verzahnung eine andere Verzahnung antreibt, lastlos oder leistungsführend, dann zieht diese Verzahnung die angetriebene Verzahnung über die Zugflanke der treibenden Verzahnung an der Zugflanke der angetriebenen Verzahnung im Sinne der momentanen Antriebs- bzw. Umlaufrichtung. Kommt es zu Umschlägen der Flankenanlagen - wie etwa beim Rasseln oder Zug-Schub-Lastwechselreaktionen - dann kommen die Rückflanken dieser Zahnräder zum Eingriff. Diese Terminologie ändert sich dann, wenn sich der Drehsinn oder die Antriebs- bzw. Umlaufrichtung dieser Verzahnungspaarung ändert.

Im Rahmen der vorliegenden Anmeldung wird die Zugflanke der treibenden Verzahnung auch als Schubflanke bezeichnet, und die Zugflanke der angetriebenen Verzahnung auch als Rückflanke. Gleichermaßen werden im Rahmen der vorliegenden Anmeldung die nicht im Eingriff befindlichen Rückflanken ebenfalls als Schubflanke bzw. Rückflanke bezeichnet.

Ferner ist die Zahnzahl und/oder die Zahnteilung (Modul) der Bauteilverzahnungen und der jeweils zugeordneten Antirasselverzahnungen vorzugsweise identisch. Im Gegensatz zu Antirasselmaßnahmen, bei denen beispielsweise die Antirasselvetzahnung des Antirasselbauteils einen Zahn mehr oder weniger hat als die zugeordnete Bauteilverzahnung, werden aufgrund der identischen Zahnzahl bzw. Zahnteilung ständige Verspannungen und eine damit einhergehende Wirkungsgradverschlechterung vermieden. (Gegebenenfalls kann jedoch die Antirasselverzahnung dieselbe Teilung, aber weniger Zähne aufweisen als die zugeordnete Bauteilverzahnung, indem nur jedem zweiten, dritten, vierten (allgemein n-ten) Bauteilzahn ein Antirasselzahn zugeordnet ist, und zwar insbesondere in Abhängigkeit von dem Frequenzbereich der störenden Anregung; eine hinreichende Sprungüberdeckung sollte gegeben sein).

Auch ist es bevorzugt, wenn die Bauteilverzahnungen und die jeweils zugeordneten Antirasselverzahnungen hinsichtlich anderer Verzahnungseigenschaften im Wesentlichen identisch sind, beispielsweise hinsichtlich des Verzahnungstyps (z.B. Evolventenverzahnung), des Schrägungswinkels, des Kopfkreisdurchmessers, des Teilkreisdurchmessers, des Eingriffswinkels, etc.

Die obige Aufgabe wird ferner gelöst durch ein Getriebe mit einer solchen Bauteilpaarung, insbesondere ein Kraftfahrzeuggetriebe, und durch einen Antriebsstrang mit einem solchen Getriebe.

Sofern das Kraftfahrzeuggetriebe als Stufengetriebe in Vorgelegebauweise ausgebildet ist, können ein oder mehrere Radsätze (jeweils mit einem Losrad und wenigstens einem Festrad) eine erfindungsgemäße Bauteilpaarung aufweisen. Die Rasselneigung derartiger Getriebe kann durch die erfindungsgemäßen Maßnahmen so weit verringert werden, dass das Stufengetriebe ohne Zweimassen-Schwungrad (ZMS) ausgeführt sein kann. Dies führt zu einem deutlich höheren Wirkungsgrad, da die Gesamtmasse bzw. der so genannte Massenfaktor verringert werden können. Auch die erheblichen Kosten für ein ZMS können so eingespart werden. Ferner kann die bei ZMS störende Aufschaukelneigung verringert werden. Zudem kann durch die Verringerung der zu beschleunigenden Drehmassen ein besseres Ansprechverhalten erzielt werden (das so ausgestattete Fahrzeug "hängt besser am Gas"). Ein Antriebsstrang mit einem solchen Stufengetriebe kann dabei eine angepasste Anfahrkupplung aufweisen, die einen integrierten Torsionsdämpfer (torsionsgedämpfte Kupplungsscheibe) aufweist. Das Stufengetriebe kann ein manuelles, ein automatisiertes oder ein Doppelkupplungsgetriebe sein.

Sofern das Getriebe als Wandlerautomat ausgebildet ist, kann wenigstens einer der Planetenradsätze eine erfindungsgemäße Bauteilpaarung aufweisen. Die hierdurch verringerte Rasselneigung kann dazu genutzt werden, um eine den hydrodynamischen Wandler überbrückende Überbrückungskupplung häufiger (früher) zu schließen. Hierdurch kann der Wirkungsgrad gesteigert werden.

Die Aufgabe wird somit vollkommen gelöst.

Vorzugsweise sind die Reibabschnitte in einer Ebene parallel zur Antriebsrichtung ausgebildet.

Auf diese Weise kann der Reibeingriff effektiv erfolgen, während das zweite Bauteil und das Antirasselbauteil in Antriebsrichtung gegeneinander versetzt werden.

Bei einer bevorzugten Zahnradpaarung können die Reibabschnitte sich folglich in Umfangsrichtung erstrecken. Bei Verwendung einer Zahnstange können die Reibabschnitte sich linear erstrecken.

Von besonderem Vorzug ist es, wenn die Reibabschnitte radial ausgerichtet sind, also insbesondere quer zu der Erstreckung eines einzelnen Zahns der Bauteilverzahnungen.

Hierdurch können das zweite Bauteil und das Antirasselbauteil kostengünstig hergestellt werden. Bei Schrägverzahnungen kann zudem die während des Zahneingriffs der Bauteilverzahnungen auftretende Axialkraft zum Andrücken verwendet werden, um also das Antirasselbauteil und das zweite Bauteil in den Reibeingriff zu drücken.

Gemäß einer weiteren bevorzugten Ausführungsform sind die Reibabschnitte dabei im Bereich von seitlichen Stirnflächen des zweiten Bauteils bzw. des Antirasselbauteils ausgebildet.

Auf diese Weise können die Reibabschnitte kostengünstig gefertigt werden.

Gemäß einer weiteren bevorzugten Ausführungsform sind die Reibabschnitte schräg bzw. konisch geformt.

Auf diese Weise kann, ähnlich wie bei Synchronisierungen für Schaltgetriebe, mit relativ geringen Kräften eine hohe Reibwirkung erzielt werden.

Ferner ist es vorteilhaft, wenn ein Reibabschnitt direkt an dem zweiten Bauteil ausgebildet ist.

Hierdurch kann die Teileanzahl der Bauteilpaarung verringert werden.

Gemäß einer weiteren bevorzugten Ausführungsform ist ein Reibabschnitt direkt an dem Antirasselbauteil ausgebildet.

Auch bei dieser Ausführungsform kann die Teileanzahl verringert werden.

Insgesamt ist es ebenfalls vorteilhaft, wenn an dem zweiten Bauteil Führungsmittel zur Führung des Antirasselbauteils in Antriebsrichtung ausgebildet sind.

Auf diese Weise kann der Versatz des Antirasselbauteils in Bezug auf das zweite Bauteil kontrolliert in Antriebsrichtung erfolgen.

Nach einer weiteren bevorzugten Ausführungsform ist an dem zweiten Bauteil ein axial vorstehender Ringvorsprung ausgebildet, der dem Antirasselbauteil zugewandt ist.

Der Ringvorsprung kann beispielsweise als Führungsmittel zur Führung des Antirasselbauteils in Antriebsrichtung verwendet werden. Der Ringvorsprung kann jedoch auch noch weitere Funktionen besitzen.

Ferner ist es vorteilhaft, wenn das Antirasselbauteil seitlich neben dem zweiten Bauteil angeordnet ist.

Dies vereinfacht die Konstruktion, wobei unter einer Anordnung seitlich neben dem zweiten Bauteil auch verstanden werden soll, dass das Antirasselbauteil auf einem axial vorstehenden Ringvorsprung des zweiten Bauteils geführt ist. Besonders bevorzugt ist es dabei jedoch, wenn die Antirasselverzahnungen seitlich neben den Bauteilverzahnungen angeordnet sind.

Es ist insgesamt vorteilhaft, wenn das Antirasselbauteil aus Kunststoff hergestellt ist.

Als Kunststoff kann beispielsweise Polyamid verwendet werden, das eine hohe Festigkeit und Steifigkeit sowie eine sehr gute chemische Beständigkeit besitzt. Ferner weist Polyamid einen hohen Verschleißwiderstand und gute Gleiteigenschaften auf.

Die mechanischen Eigenschaften lassen sich durch Faserverbunde mit Glas- oder Kohlefasern anpassen, insbesondere um die Wasseraufnahme zu senken.

Vorzugsweise werden Additive auf Polyolefin-Basis hinzugegeben, um eine hohe Schlagfähigkeit zu gewährleisten.

Ferner kann das Antirasselbauteil aus Kunststoff kostengünstig hergestellt werden. Zudem ist es möglich, das Antirasselbauteil aus Kunststoff mit relativ hoher Präzision zu fertigen, so dass das Zahnflankenspiel zwischen den Antirasselverzahnungen geringer ausgebildet sein kann als das Zahnflankenspiel zwischen den Bauteilverzahnungen.

Daher ist es bevorzugt, wenn das Antirasselbauteil mit einer höheren Präzision gefertigt ist als das zweite Bauteil.

Gemäß einer weiteren bevorzugten Ausführungsform weisen die zweite Antirasselverzahnung und/oder die erste Antirasselverzahnung Zähne auf, die in Antriebsrichtung elastisch verformbar sind.

Auf diese Weise können Geräusche, die beim Umschlagen der Antirasselverzahnungen auftreten, gedämpft werden.

Bevorzugt ist es ferner, wenn die zweite Antirasselverzahnung Zähne aufweist, die vom Zahnkopf aus mit radialen Schlitzen ausgebildet sind.

Auf diese Weise kann die elastische Verformbarkeit auch bei relativ steifen Kunststoffen (oder sonstigen Werkstoffen des Antirasselbauteils) erhöht werden.

Die erste Antirasselverzahnung ist gemäß einer bevorzugten Ausführungsform an dem ersten Bauteil ausgebildet.

Hierdurch kann die Teileanzahl verringert werden.

Dabei ist es bevorzugt, wenn die erste Antirasselverzahnung mit der ersten Bauteilverzahnung ausgerichtet ist, insbesondere in axialer Richtung. Mit anderen Worten können hierbei Zähne der ersten Bauteilverzahnung mit Zähnen der ersten Antirasselverzahnung ausgerichtet sein.

Ferner ist es vorteilhaft, wenn die erste Antirasselverzahnung Teil der ersten Bauteilverzahnung ist.

Bei dieser Ausführungsform ist die erste Bauteilverzahnung generell breiter ausgebildet als die zweite Bauteilverzahnung, wobei der axial überstehende Teil der ersten Bauteilverzahnung die erste Antirasselverzahnung bildet.

Auf diese Weise kann das erste Bauteil kostengünstig gefertigt werden.

Gemäß einer alternativen Ausführungsform ist die erste Antirasselverzahnung an einem Gegenbauteil ausgebildet, das an dem ersten Bauteil starr festgelegt ist.

Bei dieser Ausführungsform können die Antirasselverzahnungen von der Geometrie und/oder von der Materialauswahl her ideal aufeinander abgestimmt werden.

Dabei ist es von besonderem Vorteil, wenn das Gegenbauteil seitlich neben dem ersten Bauteil angeordnet ist.

Insgesamt ist es ferner vorteilhaft, wenn das zweite Bauteil und das Antirasselbauteil elastisch gegeneinander verspannt sind, insbesondere in axialer Richtung, um die Reibabschnitte aneinander anzudrücken.

Auf diese Weise kann gewährleistet werden, dass auch über eine längere Lebensdauer der Bauteilpaarung immer eine hinreichende Reibkraft zum Verzögern des Umschlagens der Bauteilverzahnungen zur Verfügung steht.

Gemäß einer ersten Ausführungsform ist es dabei bevorzugt, wenn zwischen dem zweiten Bauteil und dem Antirasselbauteil ein Sprengring angeordnet ist, der sich an einer konisch zulaufenden Fläche abstützt.

Auf diese Weise kann der Sprengring über die Wirkung der konisch zulaufenden Fläche das zweite Bauteil und das Antirasselbauteil elastisch aneinander andrücken, insbesondere in axialer Richtung.

Ferner ist es hierbei bevorzugt, wenn die konisch zulaufende Fläche an einem weiteren Ringvorsprung des zweiten Bauteils ausgebildet ist. Generell ist es jedoch auch denkbar, dass die konisch zulaufende Fläche an einem ersten Ringvorsprung ausgebildet ist, an dem das Antirasselbauteil geführt ist.

Bei Verwendung des weiteren Ringvorsprunges ist es bevorzugt, wenn dieser radial außerhalb des ersten Ringvorsprunges (der zu Führungszwecken dient) angeordnet ist.

Ferner ist es hierbei vorteilhaft, wenn der weitere Ringvorsprung eine konisch hinterschnittene Radialnut aufweist, an der sich der Sprengring abstützt.

Bei dieser Ausführungsform kann die erfindungsgemäße Bauteilpaarung mit sehr wenigen Komponenten aufgebaut werden. Ferner ergibt sich eine leichte Montierbarkeit und auch eine vergleichsweise einfache Demontierbarkeit der Bauteilpaarung.

Gemäß einer weiteren Ausführungsform wird das Antirasselbauteil gegen das zweite Bauteil mittels einer Tellerringfeder angedrückt, die sich an einem radialen Vorsprung des zweiten Bauteils abstützt, insbesondere an einem Federring.

Dabei ist es bevorzugt, wenn der Federring in einer Radialnut an einem Ringvorsprung des zweiten Bauteils festgelegt ist. Die Montage und Demontage kann hierbei sehr einfach sein.

Gemäß einer weiteren Ausführungsform ist zwischen dem zweiten Bauteil und dem Antirasselbauteil wenigstens ein Reibelement angeordnet.

Bei dieser Ausführungsform ist wenigstens ein Reibabschnitt nicht an dem zweiten Bauteil oder dem Antirasselbauteil ausgebildet sondern an dem Reibelement, das wiederum an dem zweiten Bauteil oder dem Antirasselbauteil festgelegt ist.

Hierdurch kann ein Reibelement mit einem Material ausgewählt werden, das für den vorliegenden Anwendungszweck optimiert ist.

Dabei ist es von besonderem Vorteil, wenn das wenigstens eine Reibelement elastisch deformierbar ist.

Bei dieser Ausführungsform kann auch über eine längere Lebensdauer die erfindungsgemäße Verzögerungswirkung beim Umschlagen der Bauteilverzahnungen erreicht werden.

Bei dieser Ausführungsform ist es ebenfalls bevorzugt, wenn das zweite Bauteil und das Antirasselbauteil durch Befestigungsmittel gegen den Widerstand des wenigstens einen Reibelementes aufeinander zu angedrückt werden.

Auf diese Weise kann eine gewünschte Reibwirkung gut eingestellt werden.

Der Antirasselmechanismus der erfindungsgemäßen Bauteilpaarung ist kein Getriebe im maschinenbautechnischen Sinn sondern ein Abstützmechanismus zum Zurückhalten bzw. Verzögern bzw. Dämpfen der ansonsten im Drehflankenspiel hin- und herschwingenden Verzahnungen. Die Antirasselmaßnahme ist durch einen hohen Wirkungsgrad gekennzeichnet, da der Mechanismus nur bei dem Hin- und Herschwingen (Umschlagen) der Verzahnungen wirkt, ansonsten jedoch nur interne Kräfte zwischen dem Antirasselbauteil und dem zweiten Bauteil wirken. Da das Antirasselbauteil relativ schmal ausgebildet werden kann (beispielsweise im Bereich von 0,5 bis 8 mm, insbesondere von 1 bis 5 mm), ergeben sich auch keine wesentlich erhöhten Planschverluste.

Der Antirasselmechanismus kann mit geringem Gewicht bereitgestellt werden und zu geringen Kosten. Nebengeräusche wie Heulen werden nicht erzeugt. Bei Lastwechselschlägen (also tieffrequentem Umschlagen) wird der Antirasselmechanismus überdrückt. Da der Mechanismus auch hierbei nur während der Phase des Umschlagens der Verzahnungen in Wirkung tritt, ergeben sich hierdurch keine Verschlechterungen beim Wirkungsgrad.

Im Gegensatz zu Maßnahmen des Standes der Technik sind das Antirasselbauteil und das zweite Bauteil in Antriebsrichtung gegeneinander beweglich. Da das Antirasselbauteil und das zweite Bauteil über den Reibgriff in einer Wirkbeziehung stehen, kann folglich die Freiflugphase der Bauteilverzahnungen beim Umschlagen minimiert werden, insbesondere dann, wenn das Zahnflankenspiel zwischen den Antirasselverzahnungen kleiner ist als das Zahnflankenspiel zwischen den Bauteilverzahnungen.

Die erste und die zweite Antirasselverzahnung treten nach der Art von Verzahnungen formschlüssig miteinander in Eingriff. Die Verzahnungen müssen jedoch in der Regel keine Evolventenverzahnungen wie die Bauteilverzahnungen sein. Vielmehr kann die Kontur der Zähne der Antirasselverzahnungen kugelförmig oder konvex profiliert sein. Im Idealfall berühren sich die Zähne der Antirasselverzahnungen in einem Punkt oder in einer Linie. Jegliche Profilpaarungen (konvex-konvex, plan-konvex oder konvex-plan) sind dabei denkbar.

Gemäß einer weiteren bevorzugten Ausführungsform ist das Antirasselbauteil mit einem Komplementär-Antirasselbauteil verbunden, das eine Komplementär-Antirasselverzahnung aufweist, derart, dass das Antirasselbauteil an ersten Flanken der ersten Antirasselverzahnung und das Komplementär-Antirasselbauteil an zweiten Flanken der ersten Antirasselverzahnung angreifen kann.

Diese Ausführungsform wird als eigene Erfindung angesehen, unabhängig davon, ob das Antirasselbauteil oder das Komplementär-Antirasselbauteil gegenüber dem zweiten Bauteil in Antriebsrichtung versetzbar gelagert ist, und unabhängig davon, ob dem zweiten Bauteil und dem Antirasselbauteil bzw. dem Komplementär-Antirasselbauteil jeweils ein Reibabschnitt zugeordnet ist, die in Reibeingriff miteinander stehen.

Das Antirasselbauteil und das Komplementär-Antirasselbauteil bilden zusammen eine Art Scherenanordnung, so dass diese Bauteile auch als Scherenbauteile bezeichnet werden können.

Dabei kann das Antirasselbauteil für eine Kontaktierung der ersten Flanken und das Komplementär-Antirasselbauteil für eine Kontaktierung der zweiten Flanken der ersten Antirasselverzahnung optimiert sein.

Vorzugsweise haben die Komplementär-Antirasselverzahnung und die zweite Antirasselverzahnung (des Antirasselbauteils) eine identische Verzahnung. Die Antirasselverzahnungen des Antirasselbauteils und des Komplementär-Antirasselbauteils sind dabei in einem Normalzustand vorzugsweise in Antriebsrichtung etwas gegeneinander versetzt.

Dabei ist es von besonderem Vorzug, wenn das Antirasselbauteil und das Komplementär-Antirasselbauteil in Antriebsrichtung elastisch gegeneinander verspannt sind. Bei dieser Ausführungsform wird die Antirasselverzahnung des Antirasselbauteils durch die elastische Verspannung gegen die ersten Flanken der ersten Antirasselverzahnung angedrückt. Die Komplementär-Antirasselverzahnung des Komplementär-Antirasselbauteils wird durch diese elastische Verspannung gegen die zweiten Flanken der ersten Antirasselverzahnung angedrückt. Hierdurch können Schwingungsanregungen wirkungsvoll gedämpft werden.

Von besonderem Vorzug ist es, wenn das Antirasselbauteil und das Komplementär-Antirasselbauteil koaxial zueinander angeordnet sind, insbesondere axial nebeneinander. Dabei ist es bevorzugt, wenn das Antirasselbauteil in Reibeingriff mit dem zweiten Bauteil steht. Das Komplementär-Antirasselbauteil ist hingegen bevorzugt mit dem zweiten Bauteil nicht in Reibeingriff, obgleich auch dies eine ausführbare Variante darstellen kann. Bevorzugt ist das Komplementär-Antirasselbauteil dabei in axialer Richtung zwischen dem Antirasselbauteil und dem zweiten Bauteil angeordnet.

Zur Realisierung der elastischen Verspannung ist es bevorzugt, wenn das Antirasselbauteil und das Komplementär-Antirasselbauteil an ihren aufeinander zuweisenden Stirnseiten jeweils wenigstens eine Axialtasche zur Aufnahme eines Federelementes aufweisen.

Dabei wirkt das Federelement in Antriebsrichtung. Bevorzugt ist eine Mehrzahl solcher Axialtaschen und Federelemente vorgesehen, die in Antriebsrichtung verteilt angeordnet sind.

Bei dieser Ausführungsform werden alle fertigungsbedingten Toleranzen sowie thermischen Deformationen, die sich auf die Drehflankenspiele auswirken, bis zu 100 % ausgeglichen. Es herrscht ein Zwei-Flanken-Wälzkontakt. Die Kräfte zur Kompression der Mittel zur elastischen Verspannung der Antirasselbauteile (die bei Bewegungen der Bauteilverzahnungen innerhalb des zulässigen Zahnflankenspiels auftreten) können bei der darauffolgenden Dekompression wieder an das System zurückgegeben werden. Hierdurch ergibt sich ein hoher Wirkungsgrad.

Der Zwei-Flanken-Wälzkontakt hat ferner den Vorteil, dass das elastische Verspannen der Antirasselbauteile in einer Ebene erfolgt, die von dem zweiten Bauteil unabhängig ist. Demzufolge kann vermieden werden, dass das Antirasselbauteil und das zweite Bauteil aufgrund der vorhandenen Freiheitsgrade im Radial- und Axialspiel schief zu ihrer Drehachse stehen. Folglich kann erreicht werden, dass die Antirasselbauteile als auch das zweite Bauteil in einer idealerweise nicht schiefen Stellung zum ersten Bauteil stehen. Hiermit wird ein Heulen wirksam vermieden, wie es beispielsweise bei einer elastischen Verspannung eines Antirasselzahnrades gegen ein Mutterzahnrad der Fall wäre (wie es im Stand der Technik bekannt ist).

Gemäß einer alternativen Ausführungsform sind das Antirasselbauteil und das Komplementär-Antirasselbauteil in Antriebsrichtung fest miteinander verbunden.

Hierdurch kann die Bauteilzahl erheblich verringert werden.

Das Antirasselbauteil und das Komplementär-Antirasselbauteil bilden dann zusammen ein Antirasselbauteil, wie es eingangs in Bezug auf den ersten Aspekt der vorliegenden Erfindung beschrieben worden ist.

Hierbei ist es von besonderem Vorteil, wenn die zweite Antirasselverzahnung des Antirasselbauteils durch in Antriebsrichtung elastisch verformbare Federelemente zur Anlage an den ersten Flanken der ersten Antirasselverzahnung gebildet ist, und wenn die Komplementär-Antirasselverzahnung des Komplementär-Antirasselbauteils durch in Antriebsrichtung elastisch verformbare Komplementär-Federelemente zur Anlage an den zweiten Flanken der ersten Antirasselverzahnung gebildet ist.

Bei dieser Ausführungsform kann auch ein Spielausgleich der Bauteilverzahnungen bis zu 100 % erzielt werden.

Auch bei dieser Ausführungsform herrscht ein Zwei-Flanken-Wälzkontakt. Die Kräfte, die bei Relativbewegungen innerhalb des Zahnflankenspiels der Bauteilverzahnungen in die Federelemente der Antirasselbauteile eingeleitet werden, werden bei der elastischen Rückverformung wieder an das System zurückgegeben, so dass sich ein hoher - Wirkungsgrad ergibt. Dabei können das Antirasselbauteil und das Komplementär-Antirasselbauteil in Antriebsrichtung gegenüber dem zweiten Bauteil versetzbar gelagert sein, wobei an dem Antirasselbauteil und/oder an dem Komplementär-Antirasselbauteil ein Reibabschnitt zum Reibeingriff mit einem entsprechenden Reibabschnitt des zweiten Bauteils ausgebildet sein kann. Ein Hin- und Herschwingen der Verzahnungen des Losrades innerhalb des Drehflankenspieles des treibenden Festrades (oder umgekehrt) kann hierdurch verhindert werden.

Hierbei sind die Federelemente der Antirasselbauteile selbst als Federn gestaltet, so dass in Antriebsrichtung wirkende Federelemente nicht notwendig sind.

Die Antirasselbauteile können miteinander vormontiert werden. Ferner können sie über angegossene Stifte in einem der Antirasselbauteile in Antriebsrichtung miteinander gekoppelt werden.

Auch bei dieser Ausführungsform wird durch den Zwei-Flanken-Wälzkontakt eine Schiefstellung der Antirasselbauteile und/oder des zweiten Bauteiles in Bezug auf das erste Bauteil vermieden.

Das Antirasselbauteil und das Komplementär-Antirasselbauteil können aus Kunststoff wie Polyamid, Polyimid, etc. hergestellt sein, oder auch aus Metall. Bei der Variante mit der elastischen Verspannung können die Antirasselbauteile beispielsweise aus 20 MoCrS₄, aus 18CrNiMo, aus 20NiCrMo, etc. hergestellt sein.

Bei der Variante, bei der die Antirasselbauteile Federelemente aufweisen, ist wenigstens eines der Antirasselbauteile vorzugsweise aus Federstahl hergestellt, sofern sie nicht beide aus Kunststoff ausgebildet sind.

Von besonderem Vorteil ist es dabei, wenn die Federelemente und die Komplementär-Federelemente jeweils als halbe Zähne ausgebildet sind, die sich jeweils zu einem Zahn ergänzen. D.h., in der axialen Projektion können die Federelemente und die Komplementär-Federelemente wie ein Zahn erscheinen. Die aus diesen "Zähnen" gebildete Verzahnung kann mit der Antirasselverzahnung des ersten Bauteils ein geringeres Zahnflankenspiel aufweisen als das Zahnflankenspiel der zugeordneten Bauteilverzahnungen. Alternativ und bevorzugt ist es jedoch auch möglich, diese Verzahnung so auszubilden, dass kein Zahnflankenspiel mehr vorhanden ist in Bezug auf die Antirasselverzahnung des ersten Bauteils.

Ferner ist es bevorzugt, wenn die halben Zähne im Bereich ihres Zahngrundes eine Ausnehmung aufweisen.

Durch eine solche Ausnehmung, die beispielsweise halbkreisförmig sein kann, kann die Elastizität der Federelemente in Antriebsrichtung beeinflusst werden. Dies gilt insbesondere bei der Verwendung von Metall als Ausgangsmaterial für die Antirasselbauteile bzw. Federelemente.

Gemäß einem zweiten Aspekt der vorliegenden Erfindung wird die obige Aufgabe gelöst durch eine Bauteilpaarung aus einem ersten Bauteil mit einer ersten Bauteilverzahnung und einem zweiten Bauteil mit einer zweiten Bauteilverzahnung, die mit der ersten Bauteilverzahnung in Eingriff steht, um über die Bauteilverzahnungen eine Antriebskraft in einer Antriebsrichtung übertragen zu können, wobei dem ersten Bauteil ferner eine erste Antirasselverzahnung zugeordnet ist und wobei an dem zweiten Bauteil ein Antirasselbauteil befestigt ist, das in radialer Richtung (d.h. im Wesentlichen senkrecht bzw. quer zur Antriebsrichtung) elastisch verformbar ausgebildet bzw. elastisch gelagert ist.

Die Bauteilpaarungen gemäß dem zweiten Aspekt der Erfindung lassen sich mit den Merkmalen der Bauteilpaarungen des ersten Aspektes der Erfindung kombinieren, soweit vorliegend nichts anderes erwähnt ist.

Der Kerngedanke des zweiten Aspektes der Erfindung besteht darin, dass das größte auftretende Drehflankenspiel der Bauteilverzahnungen durch die radiale Verformbarkeit des Antirasselbauteils ausgeglichen werden kann, da das Antirasselbauteil folglich im Bereich des Zahneingriffs radialelastisch ausweichen kann. Mit anderen Worten erfolgt der Zahneingriff zwischen den Antirasselverzahnungen so, dass eine solche Kraft zwischen dem Antirasselbauteil und dem zweiten Bauteil in Antriebsrichtung wirkt, dass die Bauteilverzahnungen auch bei hochfrequenten Anregungen (wie z.B. von einem Verbrennungsmotor, insbesondere Dieselmotor) nicht so innerhalb des Zahnflankenspiels umschlagen, dass ein Rasselgeräusch erzeugt wird. Anders ausgedrückt kann über die Antirasselverzahnungen ein Schleppmoment, insbesondere ein Reibmoment, in Umfangsrichtung erzeugt werden, das die störenden Anregungen dämpft. Das Schleppmoment sollte dabei geeignet sein, die oszillierenden Massenkräfte zu verringern, insbesondere zu eliminieren.

Auch bei dieser Ausführungsform können alle fertigungsbedingten Toleranzen sowie thermischen Deformationen, die sich auf die Drehflankenspiele auswirken, bis zu 100 % ausgeglichen werden.

Dabei kann das Antirasselbauteil selbst elastisch verformbar sein, so dass es im Bereich des Zahneingriffs radial elastisch ausweichen kann. Alternativ oder zusätzlich hierzu kann das Antirasselbauteil in radialer Richtung elastisch gelagert sein. Bei dieser Ausführungsform kann aufgrund des radial elastischen Ausweichens im Bereich des Zahneingriffs ein Mittelpunkt des Antirasselbauteils exzentrisch gegenüber einem Mittelpunkt des zweiten Bauteils versetzt angeordnet sein. Hierbei kann mit anderen Worten ein beliebiger Punkt des Antirasselbauteils eine kreisförmige Bewegung um den Mittelpunkt des zweiten Bauteiles herum ausführen.

Die Kräfte, die zu einer radialen Verformung des Antirasselbauteils führen, können beim Verlassen des Zahneingriffes wieder an das System zurückgegeben werden.

Von besonderem Vorzug ist es, wenn das Antirasselbauteil so angeordnet bzw. ausgebildet ist, dass es im Bereich des Zahneingriffs mit der ersten Antirasselverzahnung in radialer Richtung von dem ersten Bauteil weggedrückt wird, also im Bereich des Zahneingriffs radialelastisch ausweicht.

Dabei ist das Antirasselbauteil in der Regel zu dem ersten Bauteil hin vorgespannt, so dass das radiale Ausweichen gegen die Vorspannung erfolgt. In der Regel erfolgt jedenfalls ein radiales Auslenken des Antirasselbauteils im Bereich des Zahneingriffs.

Sofern das Antirasselbauteil und das zweite Bauteil über einen Reibeingriff miteinander in Verbindung stehen, kann durch diese Auslenkung die Reibkraft erhöht werden, so dass Relativbewegungen zwischen dem zweiten Bauteil und dem Antirasselbauteil in Antriebsrichtung aufgrund des Reibeingriffes stärker gedämpft werden. Hierdurch kann ein Umschlagen der Bauteilverzahnungen und folglich ein Rasseln oder Klappern verhindert werden.

Die radiale Auslenkbarkeit des Antirasselbauteils gegenüber dem zweiten Bauteil, an dem das Antirasselbauteil festgelegt ist, ermöglicht jedoch nicht nur eine Erhöhung der Reibkräfte. Auch können Klemmeffekte während eines Zweiflanken-Wälzeingriffes verringert und vorzugsweise vermieden werden.

Da das radiale Wegdrücken des Antirasselbauteils mit einer relativ geringen Kraft erfolgt, ist der Wirkungsgradverlust im Wesentlichen vernachlässigbar. Zudem können die zur radialen Auslenkung erforderlichen Kräfte beim Austritt aus dem Zahneingriff zumindest teilweise wieder zurückgegeben werden.

Gemäß einer weiteren bevorzugten Ausführungsform ist das Antirasselbauteil derart angeordnet bzw. ausgebildet, dass zwischen der ersten und der zweiten Antirasselverzahnung ein permanenter Zweiflanken-Wälzeingriff gegeben ist.

Mit anderen Worten stehen die erste und die zweite Antirasselverzahnung so in Wälzeingriff, dass beispielsweise immer wenigstens ein Zahn der zweiten Antirasselverzahnung die beiden gegenüberliegenden Flanken einer Zahnlücke der ersten Antirasselverzahnung berührt. Zwar ist es generell auch denkbar, die Antirasselverzahnungen so aufeinander auszulegen, dass zwischen diesen ein gewisses Zahnflankenspiel herrscht (wie es auch in der Regel bei der Bauteilverzahnung vorhanden ist). In diesem Fall ist das Zahnflankenspiel der Antirasselverzahnungen jedoch vorzugsweise kleiner als das Zahnflankenspiel der Bauteilverzahnungen.

Durch den Zweiflanken-Wälzeingriff können zudem Relativbewegungen der Bauteile in Antriebsrichtung in beide Drehrichtungen gedämpft werden.

Generell kann der Zweiflanken-Wälzeingriff auf beliebige Art und Weise realisiert werden, beispielsweise durch eine positive Profilverschiebung und/oder dadurch, dass die zweite Antirasselverzahnung einen größeren Teilkreisdurchmesser aufweist als die zugeordnete zweite Bauteilverzahnung.

Von besonderem Vorzug ist es jedoch, wenn die Zähne von einer der Antirasselverzahnungen eine Zahndicke aufweisen, die größer oder gleich der Zahnlücke der Zähne der anderen Antirasselverzahnung ist.

Mit anderen Worten wird der Zweiflanken-Wälzeingriff dadurch realisiert, dass das Zahnflankenspiel zwischen den Antirasselverzahnungen zu Null bzw. negativ ausgebildet wird. Wenn die Zahndicke größer ist als die Zahnlücke, dann wird das Antirasselbauteil im Bereich des Zahneingriffs der Antirasselverzahnungen in radialer Richtung weggedrückt, und zwar von dem ersten Bauteil weg bzw. zu dem zweiten Bauteil hin.

Wie oben erwähnt, kann hierdurch eine Reibkraft zwischen dem Antirasselbauteil und dem zweiten Bauteil in Antriebsrichtung erhöht werden. Ferner kann hierdurch ein Verklemmen verhindert werden.

Ferner ist es bevorzugt, wenn die Zahndicke der Zähne von einer der Antirasselverzahnungen um 20 µm bis 500 µm, insbesondere um 50 µm bis 250 µm, größer ist als die Zahndicke der Zähne des zugeordneten Bauteils, und/oder durch eine entsprechende Profilverschiebung.

Diese Ausführungsform ist insbesondere dann vorteilhaft, wenn die erste Antirasselverzahnung durch die erste Bauteilverzahnung gebildet wird. Durch dieses Zahndickenaufmaß kann erreicht werden, dass beispielsweise die Zahndicke der zweiten Antirasselverzahnung größer ist als die größte Zahnlücke der ersten Antirasselverzahnung, und zwar bei allen Betriebszuständen und allen Randbedingungen (funktionsbedingte oder fertigungsbedingte Toleranzen sowie bei beliebiger thermischer und/oder mechanischer Deformation der Bauteile).

Von besonderem Vorzug ist es ferner, wenn die radiale Auslenkung des Antirasselbauteils im Bereich des Zahneingriffs mit der ersten Antirasselverzahnung kleiner ist als 500 µm, insbesondere kleiner als 250 µm, bevorzugt kleiner als 150 µm.

Durch die Dimensionierung der Antirasselverzahnungen derart, dass nur eine derart kleine radiale Auslenkung erzielt wird, kann der Wirkungsgrad der Antirasselmaßnahme sehr hoch sein, auch wenn die hierdurch in das Antirasselbauteil eingeleiteten Kräfte hinreichend sind, um ein Rasseln oder Klappern der Bauteilverzahnungen zu verringern und vorzugsweise zu verhindern.

Gemäß einer weiteren bevorzugten Ausführungsform liegt eine Federrate, mit der das Antirasselbauteil in radialer Richtung vorgespannt ist bzw. in radialer Richtung elastisch auslenkbar ist, im Bereich von 2 bis 100 N/mm, insbesondere im Bereich von 5 bis 20 N/mm.

Es hat sich gezeigt, dass derartige Federraten zum einen Klemmeffekte verringern können und andererseits der Wirkungsgrad der Antirasselmaßnahme hoch sein kann. Andererseits kann die erwünschte Dämpfungseigenschaft zum Verhindern eines Rasselns der Bauteilverzahnung sicher erzielt werden.

Die obigen Dimensionierungen betreffend die Zahndicke, die radiale Auslenkung und die Federrate beziehen sich auf ein übliches Kraftfahrzeuggetriebe für Personenkraftwagen, insbesondere auf einen Achsabstand der die Bauteile tragenden Wellen im Bereich von 60 bis 90 mm und/oder auf ein maximal über das Getriebe übertragbares Moment im Anteil von 150 Nm bis 300 Nm. Bei kleineren oder größeren Bauteilpaarungen sind diese Werte entsprechend anzupassen.

Von besonderem Vorteil ist es hierbei, wenn zwischen dem Antirasselbauteil und dem zweiten Bauteil ein Radialfederelement angeordnet ist, mittels dessen das Antirasselbauteil in radialer Richtung zu dem ersten Bauteil hin vorgespannt ist.

Hierdurch kann das Drehflankenspiel der Bauteilverzahnungen zu 100 % ausgeglichen werden, da das Antirasselbauteil radial in die erste Antirasselverzahnung des ersten Bauteils eingedrückt werden kann, so dass ein Zahn der zweiten Antirasselverzahnung mit den gegenüberliegenden Flanken von Zähnen der ersten Antirasselverzahnung in Eingriff steht.

Das Radialfederelement kann als ringförmiges Wellfederelement ausgebildet sein, kann jedoch auch als "Coil"-Feder oder als Gummifeder ausgebildet sein.

Das Radialfederelement kann dabei ferner die Funktion des Reibeingriffes zwischen dem Antirasselbauteil und dem zweiten Bauteil erfüllen, sofern auch der erste Aspekt der vorliegenden Erfindung realisiert wird.

Das Radialfederelement weist bevorzugt einen Schrägabschnitt auf, mittels dessen auf das Antirasselbauteil auch eine Kraft in axialer Richtung wirkt.

Durch diese Maßnahme kann das Antirasselbauteil zum einen in axialer Richtung mittelbar (über das Radialfederelement) an dem zweiten Bauteil fixiert werden. Zum anderen kann dem Antirasselbauteil neben der Vorspannung in radialer Richtung auch eine Vorspannung in axialer Richtung erteilt werden. Hierdurch kann ein Reibeingriff zwischen dem Antirasselbauteil und dem zweiten Bauteil eingerichtet bzw. unterstützt werden, insbesondere zwischen einer Reibfläche des zweiten Bauteils, die radial oder schräg ausgerichtet ist, und zwischen einer entsprechenden Reibfläche des Antirasselbauteils.

Gemäß einer weiteren bevorzugten Ausführungsform weist das Radialfederelement einen radialelastischen Bogenabschnitt auf, der in einer Radialnut des Antirasselbauteils eingesetzt ist.

Durch diese Maßnahme kann das Radialfederelement selbst in axialer Richtung an dem zweiten Bauteil fixiert werden. Zudem kann sich das Radialfederelement in dem Bereich der Radialnut an dem zweiten Bauteil abstützen, um auf das Antirasselbauteil eine elastische Vorspannung in radialer und/oder axialer Richtung auszuüben.

Hierbei ist es bevorzugt, wenn das Radialfederelement als Ringfeder aus einem elastisch verformbaren Material wie Federstahl hergestellt ist.

Bei Verwendung von Federstahl für das Radialfederelement kann die Bauteilpaarung über weite Temperaturbereiche (insbesondere auch bei sehr tiefen oder sehr hohen Temperaturen, wie sie im Kraftfahrzeug üblich sind) zuverlässig eine Antirasselwirkung erzeugen.

Die Abmessungen des Federrings können dabei ähnlich sein wie bei einem O-Ring, wobei der Federring im Bereich zwischen dem Schrägabschnitt und dem Bogenabschnitt vorzugsweise hohl ausgebildet ist.

Ferner kann der Federring in Umfangsrichtung geschlossen sein, ist jedoch vorzugsweise in Umfangsrichtung an einer Stelle unterbrochen, insbesondere, um die Montage in der Radialnut des zweiten Bauteils zu erleichtern.

Ein Radialfederelement aus Stahl hat ferner den Vorteil, dass die Schmierstoffverträglichkeit besser ist als beispielsweise bei O-Ringen. Das Gleiche gilt hinsichtlich der Alterungsbeständigkeit.

Gemäß einer weiteren Ausführungsform weist das Antirasselbauteil einen Radialfederabschnitt auf und stützt sich radial an dem zweiten Bauteil ab, so dass das Antirasselbauteil in radialer Richtung zu dem ersten Bauteil hin vorgespannt ist.

Die Funktion des Radialfederabschnittes ist dabei im Wesentlichen die Gleiche wie jene des separaten Radialfederelementes. Die beiden Ausführungsformen können auch miteinander kombiniert sein.

Bei Ausbildung des Antirasselbauteils mit einem Radialfederabschnitt kann jedoch die Teileanzahl der Bauteilpaarung verringert werden.

Von besonderem Vorzug ist es dabei, wenn der Radialfederabschnitt einen radial innerhalb der Antirasselverzahnung angeordneten Wellfederabschnitt aufweist.

Dieser kann dabei im Wesentlichen identisch aufgebaut sein wie ein separates ringförmiges Wellfederelement, ist jedoch bei dieser Ausführungsform in vorteilhafter Weise unmittelbar an das Antirasselbauteil angeformt und einstückig hiermit ausgebildet.

Gemäß einer weiteren bevorzugten Ausführungsform weist der Radialfederabschnitt einen radial innerhalb der Antirasselverzahnung angeordneten, im Längsschnitt bogenförmigen Abschnitt auf.

Durch die Bogenform des Radialfederabschnittes kann die Radialelastizität des Radialfederabschnittes realisiert werden. Ferner kann der bogenförmige Abschnitt dazu verwendet werden, sich in radialer Richtung an dem zweiten Bauteil abzustützen. Schließlich kann der bogenförmige Abschnitt auch dazu verwendet werden, in eine Radialnut des zweiten Bauteils einzugreifen, um das Antirasselbauteil in Axialrichtung an dem zweiten Bauteil festzulegen.

Daher kann das Antirasselbauteil im Idealfall als einziges zusätzliches Bauteil zu der Bauteilpaarung hinzukommen, so dass die Teileanzahl insgesamt deutlich reduziert ist.

Gemäß einer weiteren bevorzugten Ausführungsform weist der Radialfederabschnitt einen im Längsschnitt gekröpften Abschnitt auf.

Bei dieser Ausführungsform weist das Antirasselbauteil folglich einen etwa radial ausgerichteten Abschnitt mit der Antirasselverzahnung sowie einen weiteren, etwa radial ausgerichteten Abschnitt auf der gegenüberliegenden Seite des gekröpften Abschnittes auf, der sich an dem zweiten Bauteil abstützt.

Dieser weitere Abschnitt und der Abschnitt mit der Antirasselverzahnung sind in axialer Richtung gegeneinander versetzt. Durch den dazwischen liegenden gekröpften Abschnitt kann die elastische Verformbarkeit des Antirasselbauteils in radialer Richtung realisiert werden.

Besonders bevorzugt ist es insgesamt, wenn das Antirasselbauteil einen radial inneren Lagerabschnitt aufweist, mittels dessen das Antirasselbauteil in axialer Richtung an dem zweiten Bauteil fixiert ist.

Auf diese Weise ist es gegebenenfalls möglich, auf separate Befestigungsmittel zur axialen Fixierung zu verzichten.

Ferner kann der radial innere Lagerabschnitt auch dazu dienen, das Antirasselbauteil in radialer Richtung an dem zweiten Bauteil abzustützen.

Von Vorteil ist es hierbei ferner, wenn das Antirasselbauteil in Antriebsrichtung gegenüber dem zweiten Bauteil versetzbar gelagert ist und wenn dem zweiten Bauteil und dem Lagerabschnitt jeweils ein Reibabschnitt zugeordnet ist, die in Reibeingriff miteinander stehen.

Bei dieser Ausführungsform können der erste und der zweite Aspekt der Erfindung konstruktiv günstig und mit geringem Bauteilaufwand miteinander kombiniert werden.

Von besonderem Vorteil ist es dabei, wenn der Lagerabschnitt einen Reibbelag aufweist.

Hierdurch kann die Reibkraft zwischen dem Lagerabschnitt und dem zweiten Bauteil erhöht werden.

Der Reibbelag kann an einer axialen Seite des Lagerabschnittes vorgesehen sein, der einer Axialfläche des zweiten Bauteils gegenüberliegt.

Besonders bevorzugt ist es jedoch, wenn der Reibbelag radial innen ausgebildet ist.

Gemäß einer weiteren bevorzugten Ausführungsform ist der Lagerabschnitt in axialer Richtung elastisch verformbar ausgebildet und in einen Einspannabschnitt des zweiten Bauteils axial eingespannt.

Beispielsweise kann der Lagerabschnitt eine Radialnut aufweisen und in eine Radialnut eingesetzt sein, in der er in axialer Richtung eingespannt ist.

Auch durch diese Ausbildung kann die Reibkraft zwischen dem Lagerabschnitt und dem zweiten Bauteil erhöht werden.

Es versteht sich, dass die Maßnahmen zur Erhöhung der Reibkraft auch miteinander kombiniert werden können.

Ferner ist es vorteilhaft, wenn der Radialfederabschnitt des Antirasselbauteils gegenüber dem Lagerabschnitt und/oder gegenüber der Antirasselverzahnung geschwächt ausgebildet ist, um die Radialelastizität des Antirasselbauteils zu erhöhen.

Die Schwächung kann beispielsweise dadurch erfolgen, dass das Antirasselbauteil im Bereich des Radialfederabschnittes mit einer geringeren Materialstärke ausgeführt ist. Alternativ oder zusätzlich hierzu kann der geschwächte Bereich auch vorgesehen werden, indem das Antirasselbauteil im Bereich des Radialfederabschnittes mit Ausnehmungen versehen ist, um die Radialelastizität zu erhöhen.

Während das Antirasselbauteil bei dem zweiten Aspekt der vorliegenden Erfindung bevorzugt in Reibeingriff mit dem zweiten Bauteil steht (also im stationären Zustand im Reibschluss in Antriebsrichtung mit dem zweiten Bauteil verbunden ist), ist es in einer alternativen Ausführungsform des zweiten Aspektes in der Erfindung auch möglich, das Antirasselbauteil in Antriebsrichtung formschlüssig mit dem zweiten Bauteil zu verbinden.

Bei dieser Ausführungsform kann die Antirassel-Eigenschaft des Antirasselbauteils im Wesentlichen über die radiale und/oder tangentiale Elastizität des Antirasselbauteils realisiert werden.

Dabei versteht sich ferner, dass auch bei dieser Ausführungsform, wie auch bei allen übrigen vorstehenden Ausführungsformen, die Antirasselverzahnung des Antirasselbauteils auch in Antriebsrichtung (also tangential) elastisch ausgebildet sein kann, um Relativbewegungen des ersten und des zweiten Bauteiles zu dämpfen.

Insgesamt ist ergänzend Folgendes anzumerken: Angestrebt wird eine möglichst 100%-ige Spieleliminierung durch das Antirasselbauteil, das vorzugsweise mit kleinen Kräften (etwa bis zu 50 N, insbesondere bis zu 30 N und besonders bevorzugt bis zu 10 N) und geringen Wegen (insbesondere < 20 Mikrometer, vorzugsweise ca. 2 - 4 Mikrometer) in die Gegenzahnradlücke gedrückt wird. Die Abwälzeffekte bei umlaufenden Verzahnungen werden nicht behindert, tonale und andere stochastische Geräuscheffekte, insbesondere Rasseln, werden vermieden oder zumindest deutlich gemindert.

Wichtig sind daher folgende Aspekte:
- Die Anwendung kann bei beliebigen umlaufenden abwälzenden Außen- oder Innenverzahnungen angewendet werden, also Stirnradgetriebe, Planetengetriebe
- Die Anwendung kann auch bei beliebigen Spline-Verzahnungen angewendet werden, etwa Kupplungsspline/Steckverzahnungen,
- Die Anwendung kann auch bei beliebigen Klauenverzahnungen zum Einsatz kommen
- Die Anwendung kann auch ganz allgemein bei beliebigen Welle-Nabe-Verbindungen verwendet werden, etwa als Ergänzung oder Ersatz der Passfeder. Deren Nachteil ist es, dass sie immer spielbehaftet ist. Dies ist bei Oszillation des einen oder anderen Bauteiles der Welle-Nabe-Verbindung nachteilig, da es aufgrund des Spieles/Nichtlinearitäten zu Stosseffekten/Rasseln kommen kann. Wird also etwa statt der klassischen Passfeder eine Passfeder nach Art des Antirasselbauteiles (bzw. Mikrozahnrades), etwa ein Zahn als Extremvereinfachung des Mikrozahnrades, radial- und/oder tangentialelastisch in die Gegenzahnlücke oder Passfedernut des Gegenbauteiles (Welle oder Nabe) gedrückt, kann es nicht mehr zu Rasseleffekten kommen bzw. diese können gelindert werden.
- Die Kräfte des Mikrozahnrades können vorzugsweise so erzeugt werden, dass das Antirasselbauteil (Mikrozahnrad) mit Zweiflankenwälzeingriff bedingt durch seine dickeren Zähne gegenüber der größten Gegenzahnradlücke radialelastisch in die Gegenzahnradlücke gedrückt wird. Die hierzu aufgewendeten Kräfte können allgemein auch beliebig durch Magnetismus, Federkraft, Hydraulik, Pneumatik etc. erzeugt werden, auch wenn vorliegend nur die Variante der Federelastizität vorstellt wird.

Die Anordnung des Antirasselbauteils (Mikrozahnrades) kann bei Geradverzahnungen beliebig auf der einen oder anderen oder beiden Seiten gleichzeitig des Mutterzahnrades erfolgen. Bei Schrägverzahnungen können sich je nach Richtung des Schrägungswinkels Vorzugsseiten der axialen Anordnung ergeben, etwa die eine oder die andere Seite des Mutterzahnrades. Denn in diesem Fall könnte das Mikrozahnrad als Folge der resultierenden Kräfteüberlagerungen entweder auf das Mutterzahnrad axial aufgedrückt oder von diesem weggedrückt werden. Insgesamt sind aber die ausgeführten Konstruktionen vorzugsweise so zu dimensionieren, dass, egal welche Kräfte wirken, der Effekt des Rasselns zu möglichst 100 % unterdrückt wird, die Radial- und/oder Tangentialscherelastizität gegeben ist und/oder das Mikrozahnrad kraft- oder formschlüssig in seiner Position verharrt, ohne ungewollt axial gegen das Mutterzahnrad zu drücken oder von diesem weggedrückt zu werden. In manchen ausgeführten Konstruktionen kann es sein, dass es keine freie Wahl der Anordnung des Mikrozahnrades auf einer beliebigen Stirnseite des Mutterzahnrades gibt. Sollte sich also in solchen Zwangsbedingungen eine ungünstige Lage des Mikrozahnrades ergeben, und damit einhergehend auch ungünstige Kräfteüberlagerungen, so sind geeignete Konstruktionen zu wählen, etwa Stützborde, Federringe, etc., damit das Mikrozahnrad nicht ungewollt vom Mutterzahnrad weggedrückt wird.

Das Antirasselbauteil ist vorzugsweise als Ringelement ausgebildet. Vorzugsweise liegt das Verhältnis von Außendurchmesser zu Innendurchmesser des Ringelements im Bereich von 100:50 bis 100:95, insbesondere im Bereich von 100:60 bis 100:85, insbesondere im Bereich von 100:70 bis 100:80. Hierdurch kann das Antirasselbauteil mit geringem Gewicht ausgebildet werden.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Abwicklung einer Bauteilpaarung aus einem Festrad und einem Losrad gemäß einer ersten Ausführungsform der Erfindung;
- Fig. 2: eine der Fig. 1 vergleichbare Ansicht, wobei sich eine Schubflanke des Festrades von einer Rückflanke des Losrades löst;
- Fig. 3: eine der Fig. 1 vergleichbare Ansicht, wobei eine Rückflanke des Festrades an einer Schubflanke des Losrades anliegt;
- Fig. 4: eine der Fig. 1 vergleichbare Darstellung einer weiteren Bauteilpaarung gemäß der vorliegenden Erfindung, wobei die Bauteile schrägverzahnt sind;
- Fig. 5: eine der Fig. 2 entsprechende Ansicht der Bauteilpaarung der Fig. 4;
- Fig. 6: eine der Fig. 3 vergleichbare Ansicht der Bauteilpaarung der Fig. 4;
- Fig. 7: eine perspektivische Schnittansicht einer weiteren Ausführungsform einer erfindungsgemäßen Bauteilpaarung;
- Fig. 8: eine Explosionsansicht der Komponenten der Bauteilpaarung der Fig. 7;
- Fig. 9: eine perspektivische Schnittansicht einer Bauteilpaarung gemäß einer wei- teren Ausführungsform der Erfindung;
- Fig. 10: eine Explosionsansicht der Komponenten der Bauteilpaarung der Fig. 9;
- Fig. 11: eine Explosionsansicht einer Bauteilpaarung gemäß einer weiteren Aus- führungsform der Erfindung;
- Fig. 12: eine Detailansicht eines Details XII der Fig. 11;
- Fig. 13: eine der Fig. 1 vergleichbare Ansicht einer weiteren Ausführungsform einer erfindungsgemäßen Bauteilpaarung;
- Fig. 14: eine weitere Ausführungsform einer erfindungsgemäßen Bauteilpaarung in Explosionsansicht, die eine Abwandlung der in Fig. 9 und 10 gezeigten Bauteilpaarung darstellt;
- Fig. 15: eine Teilschnittansicht der Bauteilpaarung der Fig. 14 vergrößerter Darstel- lung;
- Fig. 16: eine Explosionsansicht einer Bauteilpaarung gemäß einer weiteren Aus- führungsform der Erfindung, die eine Abwandlung der Ausführungsform der Fig. 9 und 10 darstellt;
- Fig. 17: eine Explosionsansicht einer weiteren Ausführungsform einer erfindungs- gemäßen Bauteilpaarung von schräg vorne;
- Fig. 18: die Bauteilpaarung der Fig. 17 in einer Explosionsansicht von schräg hinten;
- Fig. 19: eine Explosionsansicht einer weiteren Bauteilpaarung gemäß einer Aus- führungsform der Erfindung;
- Fig. 20: eine perspektivische Detailansicht des Zahneingriffs der Antirasselverzah- nungen der Bauteilpaarung der Fig. 19;
- Fig. 21: eine Explosionsansicht einer Bauteilpaarung gemäß einer weiteren Aus- führungsform der Erfindung;
- Fig. 22: die Bauteilpaarung der Fig. 21 in zusammengebautem Zustand in perspek- tivischer Darstellung;
- Fig. 23: eine Explosionsansicht einer Bauteilpaarung gemäß einer weiteren Aus- führungsform der Erfindung;
- Fig. 24: eine Längsschnittansicht eines Details der Bauteilpaarung der Fig. 23;
- Fig. 25: eine Explosionsansicht einer Bauteilpaarung gemäß einer weiteren Aus- führungsform der Erfindung;
- Fig. 26: eine Längsschnittansicht der Bauteilpaarung der Fig. 25;
- Fig. 27: eine Detailansicht des Details XXVII der Fig. 26;
- Fig. 28: eine der Fig. 27 vergleichbare Ansicht einer Bauteilpaarung, die eine Abwandlung der Ausführungsform der Fig. 25 bis 27 darstellt;
- Fig. 29: eine der Fig. 27 vergleichbare Ansicht einer weiteren Ausführungsform einer Bauteilpaarung, die eine Abwandlung der Bauteilpaarung der Fig. 25 bis 27 darstellt;
- Fig. 30: eine der Fig. 27 vergleichbare Darstellung einer weiteren Bauteilpaarung, die eine Abwandlung der Bauteilpaarung der Fig. 25 bis 27 darstellt;
- Fig. 31: eine Explosionsansicht einer Bauteilpaarung gemäß einer weiteren Aus- führungsform der Erfindung;
- Fig. 32: eine Detailansicht eines Längsschnittes der Bauteilpaarung der Fig. 31;
- Fig. 33: eine schematische Darstellung einer weiteren Ausführungsform einer erfindungsgemäßen Bauteilpaarung;
- Fig. 34: eine Längsschnittansicht einer weiteren Ausführungsform einer erfin- dungsgemäßen Bauteilpaarung;
- Fig. 35: eine Explosionsansicht einer Bauteilpaarung gemäß einer weiteren Aus- führungsform der Erfindung;
- Fig. 36: eine Längsschnittansicht der Bauteilpaarung der Fig. 35;
- Fig. 37: eine schematische Darstellung einer erfindungsgemäßen Bauteilpaarung;
- Fig. 38: eine der Fig. 37 entsprechende Ansicht einer weiteren Ausführungsform einer erfindungsgemäßen Bauteilpaarung;
- Fig. 39: eine schematische Darstellung eines Zahneingriffs einer erfindungsgemä- ßen Bauteilpaarung;
- Fig. 40: eine schematische Darstellung eines ersten Antriebsstranges für ein Kraft- fahrzeug; und
- Fig. 41: eine schematische Darstellung eines weiteren Antriebsstranges für ein Kraftfahrzeug.

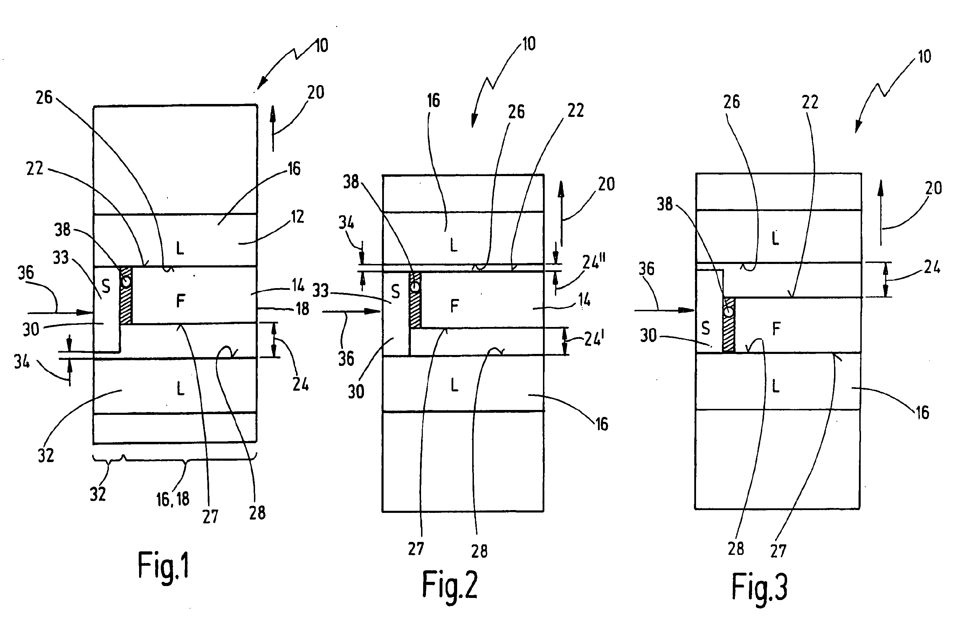

Eine erste Ausführungsform einer erfindungsgemäßen mechanischen Bauteilpaarung ist in den Fig. 1 bis 3 dargestellt und generell mit 10 bezeichnet.

Die Bauteilpaarung 10 weist ein erstes Bauteil 12 in Form eines Losrades und ein zweites Bauteil 14 in Form eines Festrades auf. Das Festrad 14 ist im vorliegenden Fall das antreibende Bauteil. Das Losrad 12 weist eine erste Bauteilverzahnung 16 auf. Das Festrad 14 weist eine zweite Bauteilverzahnung 18 auf.

Das Losrad 12 wird mittels des Festrades 14 in einer Antriebsrichtung 20 angetrieben. Dabei berührt eine Schubflanke 22 der zweiten Verzahnung 18 eine Rückflanke 26 der ersten Verzahnung 16.

Die Verzahnungen 16, 18 sind mit einem gewissen Zahnflankenspiel ausgebildet, das in Fig. 1 mit 24 bezeichnet ist.

Das Zahnflankenspiel 24 ist im vorliegenden Fall die Distanz zwischen einer Rückflanke der zweiten Verzahnung 18 und einer Schubflanke 28 der ersten Verzahnung 16.

Derartige Verzahnungen sind allgemein bekannt. Aufgrund des Zahnflankenspiels 24 kann es bei höherfrequenten Anregungen auf der Antriebsseite zu so genannten Rasselgeräuschen kommen. Hierbei schlagen die Verzahnungen 16, 18 um, so dass sich abwechselnd die Flanken 27, 28 und die Flanken 22, 26 berühren.

Insbesondere können solche hochfrequenten Anregungen bei Verwendung einer solchen Bauteilpaarung 10 in einem Antriebsstrang eines Kraftfahrzeuges auftreten, beispielsweise in einem Stufen- bzw. Stirnradgetriebe eines solchen Antriebsstranges. Dies gilt insbesondere dann, wenn das Getriebe eingangsseitig mit einem Antriebsmotor gekoppelt ist, der Vibrationen erzeugt, wie beispielsweise ein Verbrennungsmotor.

Zum Verhindern dieser Rasselgeräusche ist die Bauteilpaarung 10 mit einem Antirasselmechanismus ausgestattet, der ein Antirasselbauteil 30 beinhaltet. Das Antirasselbauteil 30 ist mit dem Festrad 14 gekoppelt, und zwar so, dass das Antirasselbauteil 30 in Antriebsrichtung 20 beweglich gegenüber dem Festrad 14 ist. Das Antirasselbauteil 30 steht mit einer ersten Antirasselverzahnung 32 in Eingriff, die an dem Losrad 12 vorgesehen ist. Zu diesem Zweck weist das Antirasselbauteil 30 eine zweite Antirasselverzahnung 33 auf.

Die erste Antirasselverzahnung 32 kann ein axialer Abschnitt der ersten Verzahnung 16 sein. Die erste Antirasselverzahnung 32 kann jedoch auch anders geformt sein als die erste Verzahnung 16, jedoch axial ausgerichtet hierzu geformt sein.

Das Antirasselbauteil 30 wird mit einer relativ hohen Präzision gefertigt, derart, dass ein Umfangspiel 34 zwischen den Antirasselverzahnungen 32, 33 kleiner ist als das Zahnflankenspiel 24.

Das Antirasselbauteil 30 ist ferner mit dem Festrad 14 über einen Reibeingriff 38 geführt. Hierzu sind an dem Antirasselbauteil 30 (bzw. hiermit verbundenen Komponenten) und an dem Festrad 14 (oder hiermit verbundenen Komponenten) entsprechende Reibflächen ausgebildet, die vorzugsweise durch eine axiale Andruckkraft 36 miteinander in Eingriff gebracht werden. Die entsprechende Darstellung ist in den Fig. 1 bis 3 schematischer Natur und soll lediglich andeuten, dass das Antirasselbauteil 30 in Antriebsrichtung 20 relativ zu dem Festrad 14 bewegt werden kann, wobei hierbei jedoch eine gewisse Reibkraft aufgrund des Reibeingriffes 38 zu überwinden ist. Durch diesen Antirasselmechanismus können Rasselgeräusche, wie oben beschrieben, deutlich reduziert oder sogar vollständig eliminiert werden.

Sofern sich aufgrund einer höherfrequenten Anregung die Schubflanke 22 der zweiten Verzahnung 18 von der Rückflanke 26 der ersten Verzahnung 16 löst, wird aufgrund des Reibeingriffes das Antirasselbauteil 30 hierbei mitgenommen. Zu einem gewissen Zeitpunkt, der in Fig. 2 gezeigt ist, schlägt die Rückflanke 26 der zweiten Antirasselverzahnung 33 an einer entsprechenden Schubflanke 22 der ersten Antirasselverzahnung 32 an (das Umfangsspiel 34 ist überwunden).

Aufgrund der höherfrequenten Anregung wird das Festrad 14 dann weiter in die Umschlagsrichtung bewegt. Hierbei wird diese Bewegung jedoch aufgrund des Reibeingriffes 38 verzögert bzw. gebremst bzw. gedämpft. Demzufolge trifft die Rückflanke 27 des Festrades 14 mit einer deutlich verringerten Geschwindigkeit (im Idealfall mit der Geschwindigkeit Null oder gar nicht) auf der Schubflanke 28 des Losrades 16 auf.

Auf diese Weise können Rasselgeräusche, wie sie bei herkömmlichen Bauteilpaarungen auftreten, effizient verringert werden.

Das Antirasselbauteil 30 ist vorzugsweise aus Kunststoff hergestellt, insbesondere aus Polyamid. Das erste Bauteil 12 und das zweite Bauteil 14 sind vorzugsweise aus Metall hergestellt, beispielsweise aus Stahllegierungen unter Verwendung von Chrom, Nickel, Molybdän etc.

Bei der Rückbewegung des Festrades 14 in Bezug auf das Losrad 12 erfolgt der gleiche Ablauf. Das Antirasselbauteil 30 wird zunächst von dem Festrad 14 mitgenommen, bis dessen Schubflanke 18 an der Rückflanke 26 der ersten Antirasselverzahnung 32 anschlägt. In der Folge wird die weitere Bewegung des Festrades 14 auf das Losrad 12 zu wiederum aufgrund des Reibeingriffes 38 verzögert. Daher kann erreicht werden, dass die Schubflanke 22 dann mit einer nur geringen Geschwindigkeit auf die Rückflanke 26 auftrifft (oder im Idealfall mit der Geschwindigkeit Null bzw. gar nicht auftrifft).

Die in den Fig. 1 bis 3 gezeigte Bauteilpaarung weist zwei Zahnräder 12, 14 auf, die geradverzahnt sind. Die erfindungsgemäße Bauteilpaarung kann jedoch auch als Paarung aus einer Zahnstange und einem Zahnrad ausgebildet sein. Die Abläufe sind vollkommen identisch.

In den folgenden Figuren sind alternative oder abgewandelte Ausführungsformen von Bauteilpaarungen gezeigt, die hinsichtlich Aufbau und Funktionsweise generell der Bauteilpaarung 10 der Fig. 1 bis 3 entsprechen. Gleiche Elemente sind daher mit gleichen Bezugsziffern gekennzeichnet. Im Folgenden werden jeweils lediglich die Unterschiede erläutert.

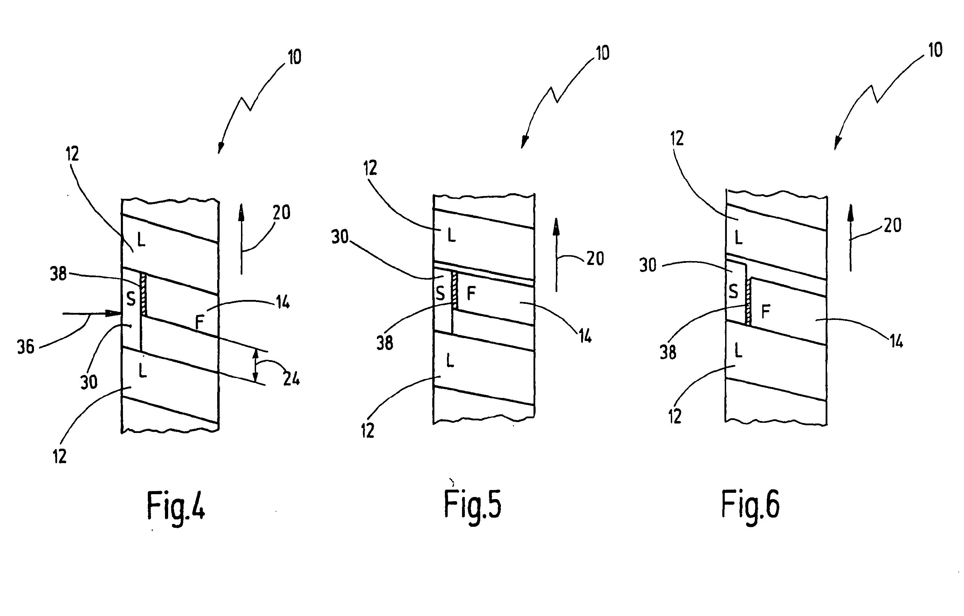

In den Fig. 4 bis 6 ist eine weitere Bauteilpaarung gezeigt, bei der das Festrad 14 und das Losrad 12 schrägverzahnt sind.

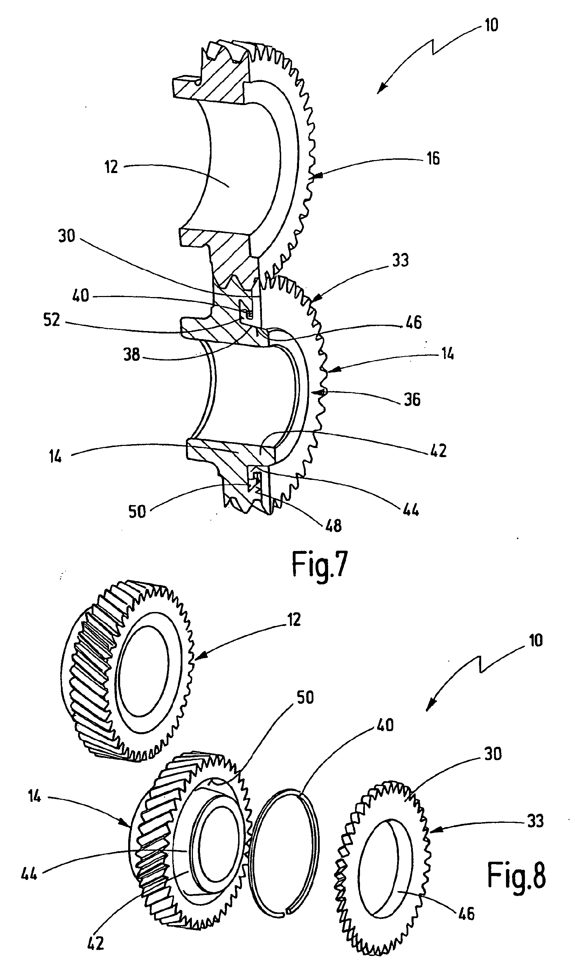

In den Fig. 7 und 8 ist eine weitere Ausführungsform einer erfindungsgemäßen Bauteilpaarung gezeigt.

Bei der Bauteilpaarung 10 der Fig. 7 und 8 sind das Antirasselbauteil 30 und das Festrad 14 über einen Sprengring bzw. Seeger-Ring 40 miteinander gekoppelt.

Das Festrad 14 weist hierbei einen ersten Ringvorsprung 42 auf, der an seinem Außenumfang mit einem konischen Reibabschnitt 44 ausgebildet ist. In entsprechender Weise weist das Antirasselbauteil 30 am Innenumfang einen konischen Reibabschnitt 46 auf. Das Antirasselbauteil 30 wird folglich in Antriebsrichtung 20 mittels des ersten Ringvorsprunges 42 geführt. Ferner erfolgt der Reibeingriff 38 zwischen dem ersten Ringvorsprung 42 und dem Innenumfang des Antirasselbauteils 30.

Um die Andruckkraft 36 für den Reibeingriff 38 zu erzeugen, weist das Festrad 14 einen zweiten Ringvorsprung 48 auf, der radial außerhalb, jedoch konzentrisch zu dem ersten Ringvorsprung 42 angeordnet ist.

An der radial innenliegenden Seite weist der zweite Ringvorsprung 48 eine konisch zulaufende hinterschnittene Radialnut 50 auf. Das Antirasselbauteil 30 weist auf der dem Festrad 14 zugewandten Seite einen Ringsteg auf, wobei der Sprengring 40 in eine Radialnut des Ringsteges 52 eingesetzt ist. Beim Montieren des Antirasselbauteils 30 an dem Festrad 14 wird das Antirasselbauteil 30 auf den ersten Ringvorsprung 42 aufgeschoben, bis der in Umfangsrichtung bzw. radial nach außen vorgespannte Sprengring 40 die Radialnut 50 des zweiten Ringvorsprunges 48 hintergreift.

Da die Radialnut 50 konisch zuläuft, wird hierdurch das Antirasselbauteil 30 auf das Festrad 14 gezogen, so dass die Reibabschnitte 44, 46 in Reibeingriff 38 gelangen.

Anstelle eines zweiten Ringvorsprunges 48 kann an dem Festrad 14 auch eine Nut vorgesehen sein, die sich bis unter die zweite Verzahnung 18 erstreckt, wie es in Fig. 7 dargestellt ist.

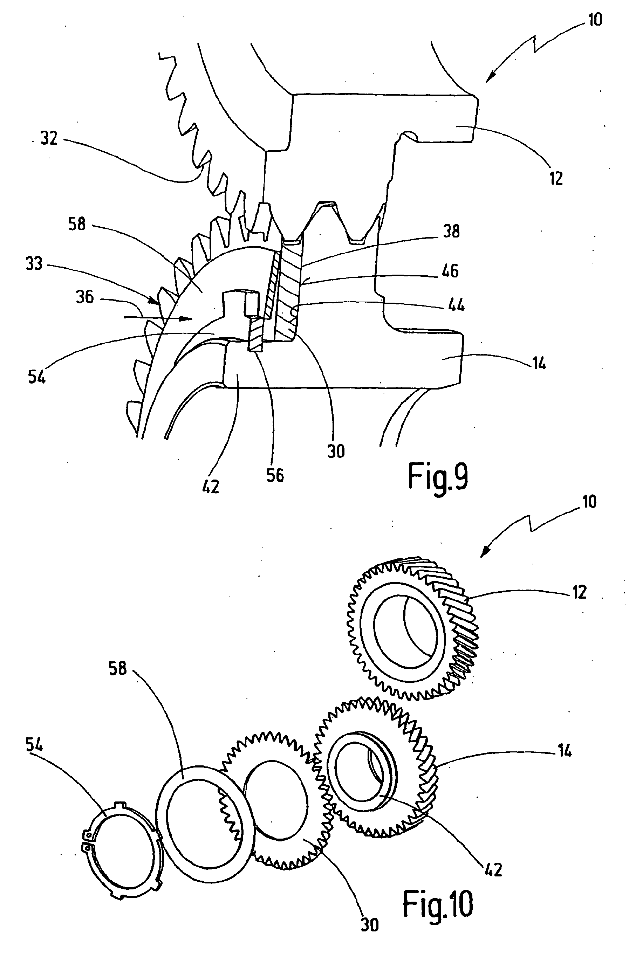

In den Fig. 9 und 10 ist eine weitere Ausführungsform einer erfindungsgemäßen Bauteilpaarung 10 gezeigt.

Bei der Bauteilpaarung 10 weist das Festrad 14 wiederum einen ersten Ringvorsprung 42 auf, auf den das Antirasselbauteil 30 axial aufgeschoben ist.

Ferner ist an dem Außenumfang des ersten Ringvorsprunges 42 eine Radialnut 56 vorgesehen, in die ein Federring 54 (beispielsweise ein Seeger-Ring) eingesetzt ist. Ferner beinhaltet der Antirasselmechanismus der Bauteilpaarung 10 der Fig. 9 und 10 eine Tellerringfeder 58, die zwischen der axial außenliegenden Seite des Antirasselbauteils 30 und der axial innenliegenden Seite des Federrings 54 angeordnet ist. Die Tellerringfeder 58 drückt das Antirasselbauteil 30 in axialer Richtung gegen eine sich radial erstreckende Fläche des Festrades 14, die den Reibabschnitt 44 bildet. Der Reibabschnitt 46 des Antirasselbauteils 30 ist im vorliegenden Fall als Radialfläche gebildet, die beispielsweise flächig an der entsprechenden Reibabschnitt-Fläche des Festrades 14 anliegen kann.

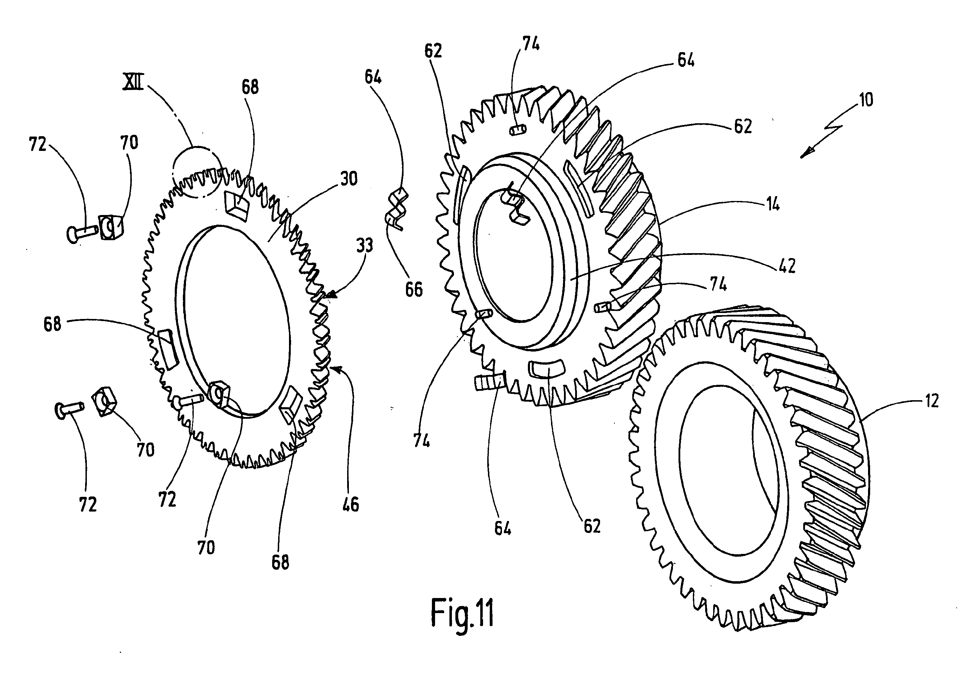

In Fig. 11 ist eine weitere Ausführungsform einer erfindungsgemäßen Bauteilpaarung 10 gezeigt.

Das Festrad 14 der Bauteilpaarung 10 der Fig. 11 weist über den Umfang verteilt an einer Stirnseite eine Mehrzahl von Axialvertiefungen 62 auf, in die jeweils Wellfedern 64 eingesetzt sind. Von dem Festrad 14 weg weisende Flächen der Wellfedern 64 sind als Reibabschnitte 66 (entsprechend dem Reibabschnitt 44) ausgebildet.

Das Antirasselbauteil 30 ist mit einer Mehrzahl von über den Umfang verteilten Axiallöchern 68 ausgebildet, in die Andrucksteine 70 eingesetzt werden können. Über die Andrucksteine können Schrauben 72 in entsprechende Gewindelöcher 74 an der Stirnseite des Festrades 14 eingeschraubt werden.

Die Wellfedern 64 sind elastisch verformbar ausgebildet. Die Reibabschnitte 66 der Wellfedern 64 greifen an der in Fig. 11 nicht dargestellten Stirnseite des Antirasselbauteils 30 an (bei 46).

Die Mehrzahl von Axialvertiefungen 62 und die Mehrzahl von Gewindelöchern 74 an der Stirnseite des Festrades 14 sind in Umfangsrichtung versetzt ausgebildet.

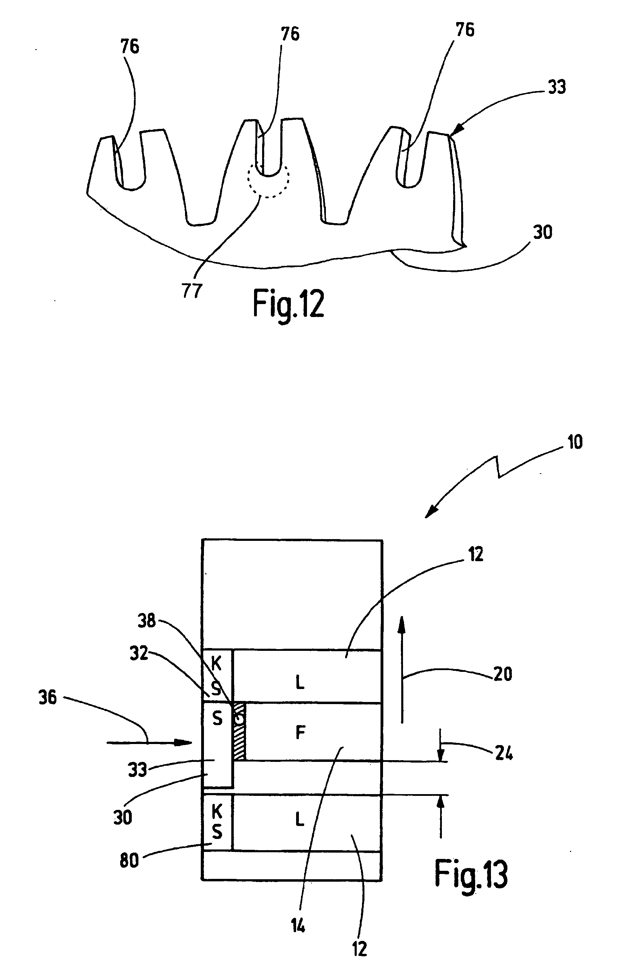

In Fig. 12 ist ein Detail XII der Fig. 11 gezeigt. Es ist zu erkennen, dass die zweite Antirasselverzahnung 33 des Antirasselbauteils 30 mit Zähnen ausgebildet ist, die vom Zahnkopf ausgehende, radial nach innen gerichtete Radialfedernuten 76 aufweisen.

Die Radialfedernuten 76 erhöhen die Elastizität der Zähne der zweiten Antirasselverzahnung 33 in Antriebsrichtung 20, so dass das Aufschlagen auf entsprechende Zähne der ersten Antirasselverzahnung 32 (nach Überbrücken des Umfangsspiels 34) besser gedämpft werden kann.

Bei 77 ist gezeigt, dass die Elastizität der Zähne der zweiten Antirasselverzahnung 33 in Antriebsrichtung 20 noch weiter erhöht werden kann, indem am Grund der Radialfedernuten 76 Axialausnehmungen 77 in dem Antirasselbauteil vorgesehen werden, die vorzugsweise breiter sind als die Breite der Radialfedernuten 76.

In Fig. 13 ist eine weitere alternative Ausführungsform einer Bauteilpaarung 10 gezeigt, die generell der Bauteilpaarung der Fig. 1 bis 3 entspricht.

Bei der Bauteilpaarung 10 der Fig. 13 ist zum Zwecke der Ausbildung der ersten Antirasselverzahnung 32 ein Gegen- bzw. Komplementärbauteil 80 vorgesehen, das ebenfalls als Zahnrad bzw. Zahnscheibe ausgebildet sein kann. Das Gegenbauteil 80 ist hierbei fest bzw. starr mit dem Losrad 12 verbunden. Das Gegenbauteil 80 kann bei dieser Ausführungsform aus einem anderen Material als das Losrad 12 ausgebildet sein, beispielsweise aus einem Kunststoffmaterial wie Polyamid. Alternativ kann das Gegenbauteil 80 jedoch auch aus einem metallischen Werkstoff bestehen. Das Antirasselbauteil 30 kann bei jeder der oben genannten Ausführungsformen generell aus Metall hergestellt sein, sofern die erforderliche Präzision erzielbar ist.

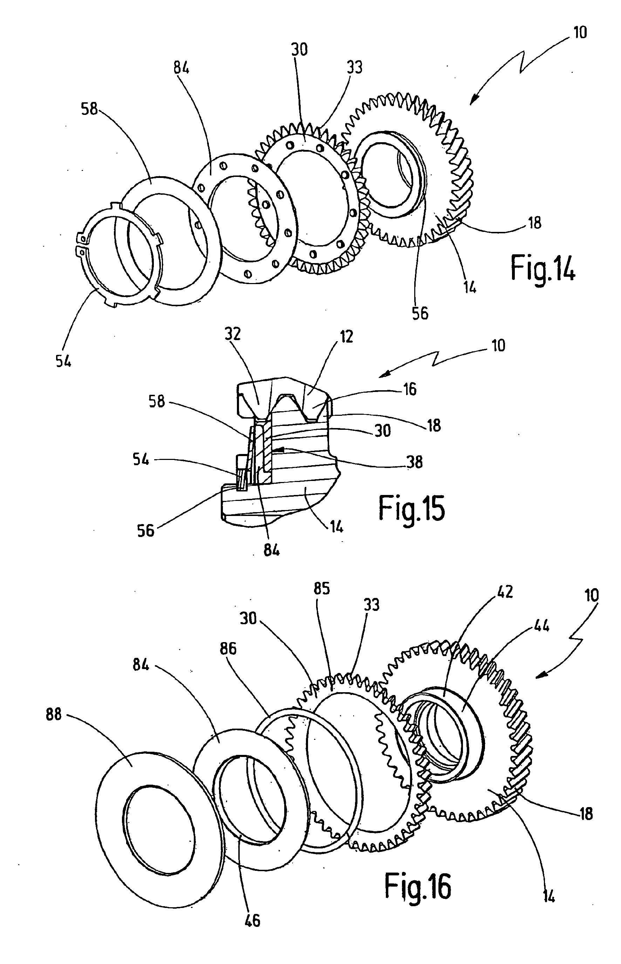

In den nachfolgend beschriebenen Fig. 14 bis 34 sind weitere Ausführungsformen von Bauteilpaarungen 10 gezeigt, die generell hinsichtlich Aufbau und Funktion den oben beschriebenen Ausführungsformen entsprechen. Gleiche Elemente sind daher mit gleichen Bezugsziffern gekennzeichnet. Im Folgenden werden lediglich die Unterschiede erläutert.

Jede der nachstehend erörterten Ausführungsformen lässt sich ferner mit den oben beschriebenen Ausführungsformen kombinieren (beispielsweise hinsichtlich der Elastizität der zweiten Antirasselverzahnung 33 in Antriebsrichtung, wie es in Fig. 12 gezeigt ist).

In den Fig. 14 und 15 ist eine weitere alternative Ausführungsform einer Bauteilpaarung 10 gezeigt, die eine Abwandlung der Bauteilpaarung 10 der Fig. 9 und 10 darstellt. Die Bauteilpaarung 10 der Fig. 14 und 15 entspricht hinsichtlich Aufbau und Funktion der Bauteilpaarung 10 der Fig. 9 und 10, soweit nachstehend nichts anderes angegeben ist.

Die Bauteilpaarung 10 der Fig. 14 und 15 beinhaltet einen axial neben dem Antirasselbauteil 30 angeordneten Andruckring 84, der über geeignete Formschlussmittel (in der dargestellten Ausführungsform Axialzapfen und Axiallöcher) in Antriebsrichtung 20 formschlüssig mit dem Antirasselbauteil 30 verbunden ist. Der Andruckring 84 kann beispielsweise aus Metall hergestellt sein, wohingegen das Antirasselbauteil 30 beispielsweise aus einem Kunststoff hergestellt sein kann. Bei dieser Ausführungsform kann der Andruckring 84 dazu dienen, die axiale Andruckkraft der Tellerringfeder 58 gleichmäßiger auf das Antirasselbauteil 30 zu übertragen. Demzufolge kann die Wirksamkeit des Reibeingriffes 38 zwischen dem Antirasselbauteil 30 und dem zweiten Bauteil 14 gesteigert werden.

Fig. 16 zeigt eine weitere alternative Ausführungsform einer Bauteilpaarung 10, die hinsichtlich Aufbau und Funktion generell der Ausführungsform der Fig. 9 und 10 entspricht. Im Folgenden werden lediglich Unterschiede erläutert.

Die Bauteilpaarung 10 der Fig. 16 beinhaltet ein Antirasselbauteil 30, das einen größeren Innendurchmesser aufweist als ein axialer Ringvorsprung 42 des zweiten Bauteils 14. Auf der dem zweiten Bauteil 14 abgewandten axialen Seite ist das Antirasselbauteil 30 mit einer abgerundeten Fläche 85 ausgebildet, die im Längsschnitt (nicht gezeigt) konvex oder konkav nach innen zuläuft.

Dieser abgerundeten Fläche 85 ist ein Reibring 86 (beispielsweise in der Form eines O-Ringes oder eines Federringes aus Metall) zugeordnet, der an der abgerundeten Fläche 85 anliegt. Der Reibring 84 wird mittels eines Andruckringes 84 in axialer Richtung gegen die abgerundete Fläche 85 angedrückt. Der Andruckring 84 oder ein axial noch weiter außen angeordnetes Abschlusselement 88 in der Form eines Ringelementes kann dazu ausgelegt sein, an dem Innenumfang einen Reibabschnitt 46 auszubilden, der mit einem entsprechenden Reibabschnitt 44 an dem Ringvorsprung 42 des zweiten Bauteils 14 in Reibeingriff treten kann. Der Andruckring kann jedoch, wie in Fig. 16 dargestellt, auch dazu ausgelegt sein, auf den Ringvorsprung 42 des zweiten Bauteils 14 aufgeschraubt zu werden, um den Reibring 86 mit dem Antirasselbauteil 30 zu verspannen. In diesem Fall kann das Abschlusselement 88 als Sicherungsmutter ausgebildet sein, die ein Lösen der Verschraubung verhindert.

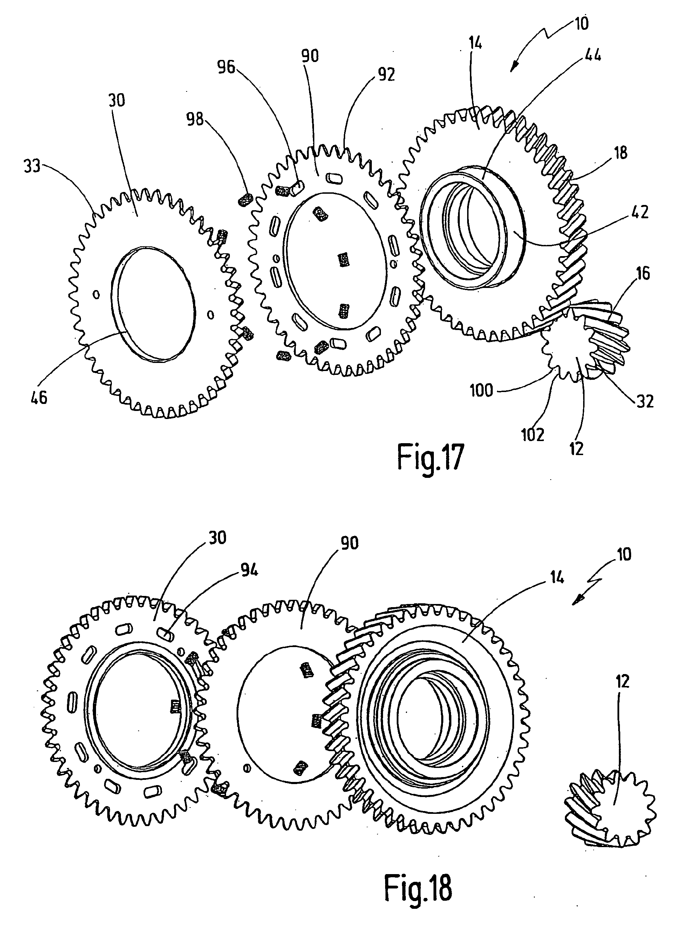

In den Fig. 17 und 18 ist eine weitere Ausführungsform einer Bauteilpaarung 10 gezeigt.

Bei der Bauteilpaarung 10 der Fig. 17 und 18 ist dem Antirasselbauteil 30 ein Komplementär-Antirasselbauteil 90 zugeordnet. Das Komplementär-Antirasselbauteil 90 weist eine Komplementär-Antirasselverzahnung 92 auf, die hinsichtlich Form und Anzahl der Zähne der Antirasselverzahnung 33 des Antirasselbauteils 30 entspricht. Das Komplementär-Antirasselbauteil 90 ist in axialer Richtung zwischen dem zweiten Bauteil 14 und dem Antirasselbauteil 30 angeordnet. Das Antirasselbauteil 30 weist auf der dem Komplementär-Antirasselbauteil 90 zugewandten Axialseite eine Mehrzahl von Axialtaschen 94 auf. In entsprechender Weise weist das Komplementär-Antirasselbauteil 90 auf der dem Antirasselbauteil 30 zugewandten axialen Seite eine Mehrzahl von Axialtaschen 96 auf. Das Antirasselbauteil 30 und das Komplementär-Antirasselbauteil 90 werden aneinanderliegend montiert, wobei in den Taschen, die durch die Axialtaschen 94 und die Axialtaschen 96 gebildet werden, Federelemente 98 (beispielsweise in Form von Schraubendruckfedern oder anderen Federelementen) aufgenommen sind. Durch die Federelemente 98 werden das Antirasselbauteil 30 und das Komplementär-Antirasselbauteil 90 in Antriebsrichtung gegeneinander verspannt.

Die vormontierte Anordnung aus dem Antirasselbauteil 30 und dem Komplementär-Antirasselbauteil 90 wird anschließend an dem zweiten Bauteil 14 angeordnet, wobei ein Reibabschnitt 46 am Innenumfang des Antirasselbauteils 30 mit einem Reibabschnitt 44 an einem Ringvorsprung 42 des zweiten Bauteils 14 in Reibeingriff gelangt. Der Innendurchmesser des Komplementär-Antirasselbauteils 90 ist größer als jener des Antirasselbauteils 30, so dass das Komplementär-Antirasselbauteil 90 mit dem zweiten Bauteil 14 vorzugsweise nicht in Reibeingriff steht. Durch die Verspannung des Antirasselbauteils 90 und des Komplementär-Antirasselbauteils 90 in Antriebsrichtung gelangt die Antirasselverzahnung 33 des Antirasselbauteils 30 im Wesentlichen ausschließlich mit ersten Flanken 100 der Antirasselverzahnung 32 des ersten Bauteils 12 in Eingriff. In entsprechender Weise gelangt die Komplementär-Antirasselverzahnung 92 des Komplementär-Antirasselbauteils 90 bevorzugt mit zweiten Flanken 102 der Antirasselverzahnung 32 des ersten Bauteils 12 in Eingriff. Die ersten Flanken 100 und die zweiten Flanken 102 sind jeweils einander gegenüberliegende Flanken von benachbarten Zähnen der Antirasselverzahnung 32.

Das Antirasselbauteil 30 und das Komplementär-Antirasselbauteil 90 bilden Scherenzahnräder, die beispielsweise aus Kunststoff oder aus Metall hergestellt sein können. Durch die Scherenwirkung des Antirasselbauteils 30 und des Komplementär-Antirasselbauteils 90 können alle fertigungsbedingten Toleranzen sowie thermischen Deformationen, die sich auf die Drehflankenspiele auswirken, bis zu 100 % ausgeglichen werden. Ferner herrscht ein Zwei-Flanken-Wälzkontakt. Die Kräfte zur Kompression der Scherenzahnräder beim Eintritt in den Zahneingriff mit dem ersten Bauteil 12 werden beim Verlassen dieses Zahneingriffes wieder an das System zurückgegeben.

Ferner ist das Äußere der Scherenzahnräder (das Antirasselbauteil 30) mit dem zweiten Bauteil 14 durch Reibeingriff verbunden. Hierdurch kann, wie auch bei den obigen Ausführungsformen beschrieben, das Hin- und Herschwingen der Zähne des Losrades innerhalb des Drehflankenspieles des treibenden Festrades verhindert werden.

Die Scherenzahnräder werden gegeneinander verspreizt, ohne dass dies einen unmittelbaren Einfluss auf das zweite Bauteil 14 hat. Demzufolge können Schiefstellungen der Scherenzahnräder und des zweiten Bauteils 14 zum Gegenzahnrad 12 vermieden werden. Hierdurch kann ein Heulen wirksam vermieden werden.

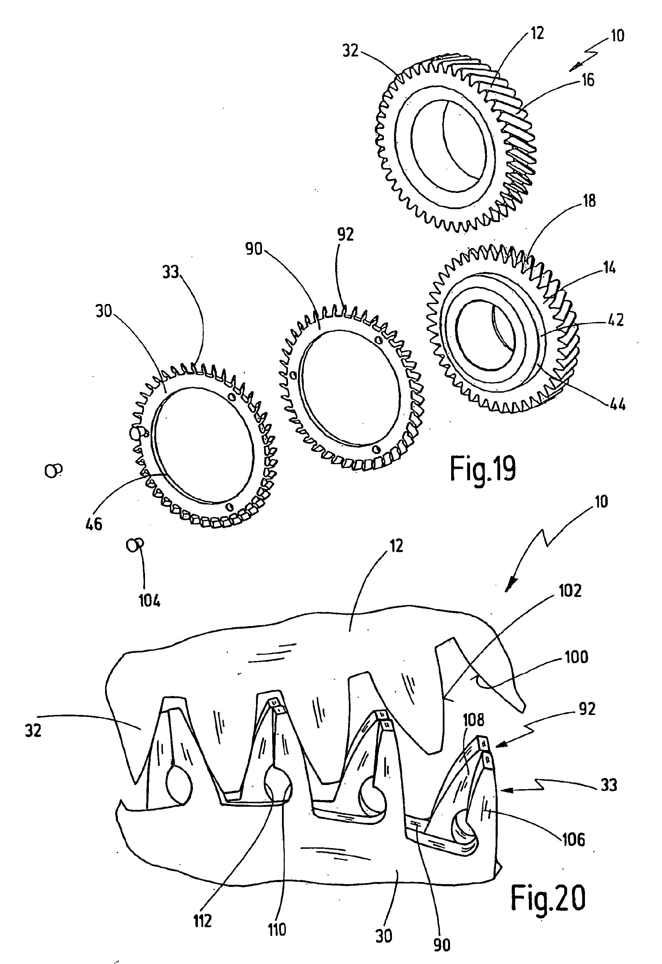

In den Fig. 19 und 20 ist eine weitere Ausführungsform einer Bauteilpaarung 10 gezeigt. Diese entspricht hinsichtlich Aufbau und Funktionsweise generell der Bauteilpaarung 10 der Fig. 17 und 18. Im Folgenden werden lediglich Unterschiede erläutert.

Die Bauteilpaarung 10 der Fig. 19 und 20 weist ein Komplementär-Antirasselbauteil 90 auf, das in Antriebsrichtung formschlüssig mit dem Antirasselbauteil 30 verbunden ist. Dies kann beispielsweise über geeignete Befestigungselemente 104 erfolgen (Bolzen, Stifte, Niete oder Ähnliches). Ferner können das Antirasselbauteil 30 und/oder das Komplementär-Antirasselbauteil 90 einen Reibabschnitt 46 aufweisen, der mit dem Reibabschnitt 44 an dem Ringvorsprung 42 des zweiten Bauteils 14 in Reibeingriff steht.

Die Antirasselverzahnung 33 des Antirasselbauteils 30 weist radial vorspringende Federelemente in Form von halben Zähnen 106 auf. In entsprechender Weise weist die Komplementär-Antirasselverzahnung 92 radial vorspringende Federelemente in Form von halben Zähnen 108 auf.

Das Antirasselbauteil 30 und das Komplementär-Antirasselbauteil 90 sind in Umfangsrichtung so miteinander verbunden, dass sich die halben Zähne 106, 108 in axialer Draufsicht (siehe Fig. 20) etwa zu der Form eines vollen Zahns ergänzen. Die halben Zähne 106 sind hierbei dazu ausgelegt, die ersten Flanken 100 der ersten Antirasselverzahnung 32 des ersten Bauteils 12 zu kontaktieren. Die halben Zähne 108 der Komplementär-Antirasselverzahnung 92 sind dazu ausgelegt, die gegenüberliegenden zweiten Flanken 102 der Antirasselverzahnung 32 zu kontaktieren.

Die halben Zähne 106, 108 sind von den Abmessungen und Relativströmungen her so gewählt, dass sich in Bezug auf die Antirasselverzahnung 32 ein bis zu 100%-iger Spielausgleich realisieren lässt. Die halben Zähne 106, 108 sind dabei in Antriebsrichtung elastisch verformbar. Zu diesem Zweck können das Antirasselbauteil 30 und das Komplementär-Antirasselbauteil 90 aus Kunststoff wie Polyamid, Polyimid etc. oder aus Metall wie z.B. Federstahl hergestellt sein.

Ansonsten lassen sich mit dieser Ausführungsform im Wesentlichen die gleichen Vorteile erzielen wie mit den Scherenzahnrädern der Bauteilpaarung der Fig. 17 und 18. Im vorliegenden Fall sind statt in Antriebsrichtung wirkender Federelemente 98 die Zähne 106, 108 selbst als Federelemente gestaltet.

Um die Elastizität der halben Zähne 106, 108 in Antriebsrichtung zu beeinflussen, können die halben Zähne 106, 108 im Bereich ihres Zahngrundes jeweils mit Ausnehmungen versehen sein, wie sie in Fig. 20 bei 110 bzw. 112 dargestellt sind. Diese Ausnehmungen 110, 112 können beispielsweise hinsichtlich ihrer Form auch den Ausnehmungen 77 entsprechen, die in Fig. 12 gezeigt sind. Eine abgerundete, insbesondere halbkreisförmige Ausgestaltung der Ausnehmungen 110, 112 ist zur Vermeidung von Spannungen bevorzugt.

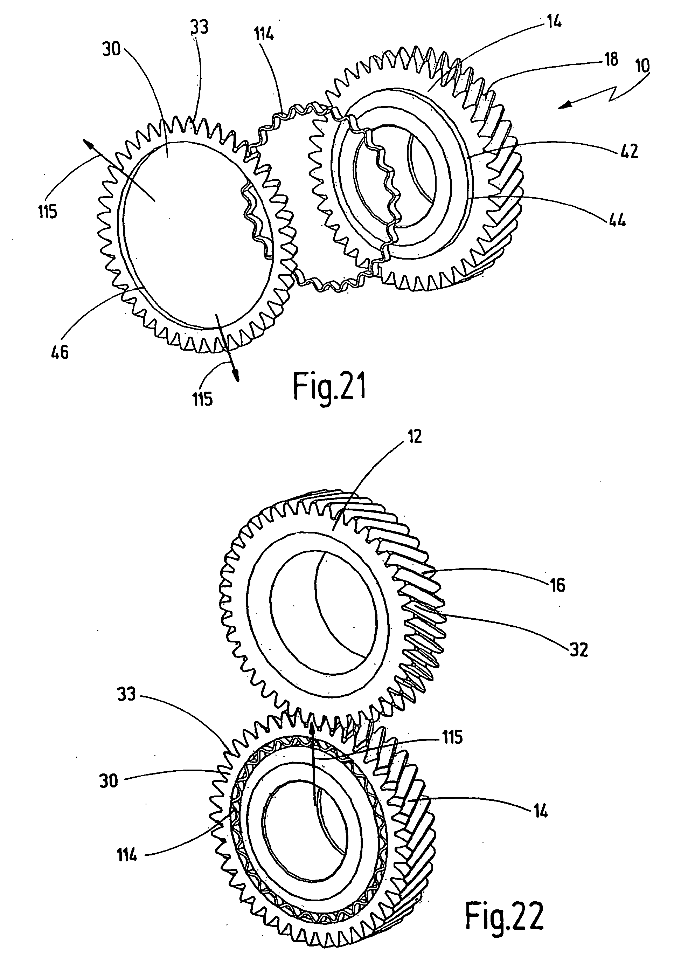

In den folgenden Fig. 21 bis 34 werden jeweils weitere Ausführungsformen von Bauteilpaarungen 10 gezeigt, die hinsichtlich Form und Funktionsweise den oben beschriebenen Ausführungsformen entsprechen können. Alternativ oder zusätzlich hierzu ist das Antirasselbauteil 30 in radialer Richtung elastisch verformbar ausgebildet und durch geeignete Federmittel in radialer Richtung gegen die Antirasselverzahnung 32 des ersten Bauteils 12 vorgespannt. Auch bei dieser Ausführungsform kann das auftretende Drehflankenspiel ausgeglichen werden. Ferner kann das Antirasselbauteil 30 über einen Reibeingriff mit dem zweiten Bauteil 14 verbunden sein (direkt oder indirekt). Alternativ ist es jedoch auch denkbar, das Antirasselbauteil 30 bei den nachstehend beschriebenen Ausführungsformen starr an dem zweiten Bauteil 14 festzulegen, auch wenn dies nicht in Bezug auf sämtliche Ausführungsformen erwähnt ist.

Die Antirasselverzahnung 33 des Antirasselbauteils 30 kann dabei starr bzw. steif ausgebildet sein. Besonders bevorzugt ist es jedoch, wenn die Antirasselverzahnung 33 des Antirasselbauteils 30 auch in Antriebsrichtung zumindest begrenzt elastisch verformbar ausgebildet ist (wie es beispielsweise in Bezug auf die obige Fig. 12 beschrieben wurde).

Im Bereich des Zahneingriffs des ersten Bauteils 12 und des zweiten Bauteils 14 wird die Antirasselverzahnung 33 in radialer Richtung in die Antirasselverzahnung 32 des ersten Bauteils 12 gedrückt, um für den gewünschten Spielausgleich (bis zu 100 %) zu sorgen.

Die Ausführungsform mit radialelastischem Antirasselbauteil 30 kann mit sehr wenigen Bauteilen realisiert werden.

In den Fig. 21 und 22 ist eine erste Bauteilpaarung 10 mit radialelastischem Antirasselbauteil 30 gezeigt.

Ein Innendurchmesser des Antirasselbauteils 30 ist größer als der Außendurchmesser eines Ringvorsprunges 42 des zweiten Bauteils 14. Ferner weist die Bauteilpaarung ein Radialfederelement 114 in der Form einer ringförmigen Wellfeder 114 auf, die in zusammengebautem Zustand (siehe Fig. 22) in radialer Richtung zwischen dem Ringvorsprung 42 und dem Innenumfang des Antirasselbauteils 30 angeordnet ist.

Das Radialfederelement 114 stützt sich in radialer Richtung an dem Ringvorsprung 42 ab und übt eine Federkraft in radialer Richtung 115 auf das Antirasselbauteil 30 aus.

Hierdurch wird die Antirasselverzahnung 33 des Antirasselbauteils 30 im Bereich des Zahneingriffs zwischen den Zahnrädern 12, 14 in radialer Richtung in die Antirasselverzahnung 32 des ersten Bauteils 12 gedrückt, wie es in Fig. 22 dargestellt ist. Anders formuliert, kann das Antirasselbauteil 30 gegen die Federkraft aus der Antirasselverzahnung 32 herausgedrückt (ausgelenkt) werden.

Es versteht sich hierbei, dass die Abmessungen der Zähne der Antirasselverzahnung 33 in geeigneter Weise angepasst sein können, um einen Kontakt der Zahnspitzen der Antirasselverzahnung 33 mit dem Zahngrund der Antirasselverzahnung 32 zu vermeiden.

Das Radialfederelement 114 kann als separates Bauteil ausgeführt sein, wie es in den Fig. 21 und 22 dargestellt ist. Das Radialfederelement 114 kann ein Bauteil aus Kunststoff oder aus einem Federstahl sein. Das Antirasselbauteil 30 ist bevorzugt ein Kunststoffteil, kann jedoch auch aus Metall ausgebildet werden.

Ferner kann das Radialfederelement 114 einstückig mit dem Antirasselbauteil 30 ausgebildet werden. In diesem Fall kann die Anzahl der Teile der Bauteilpaarung 10 weiter reduziert werden.

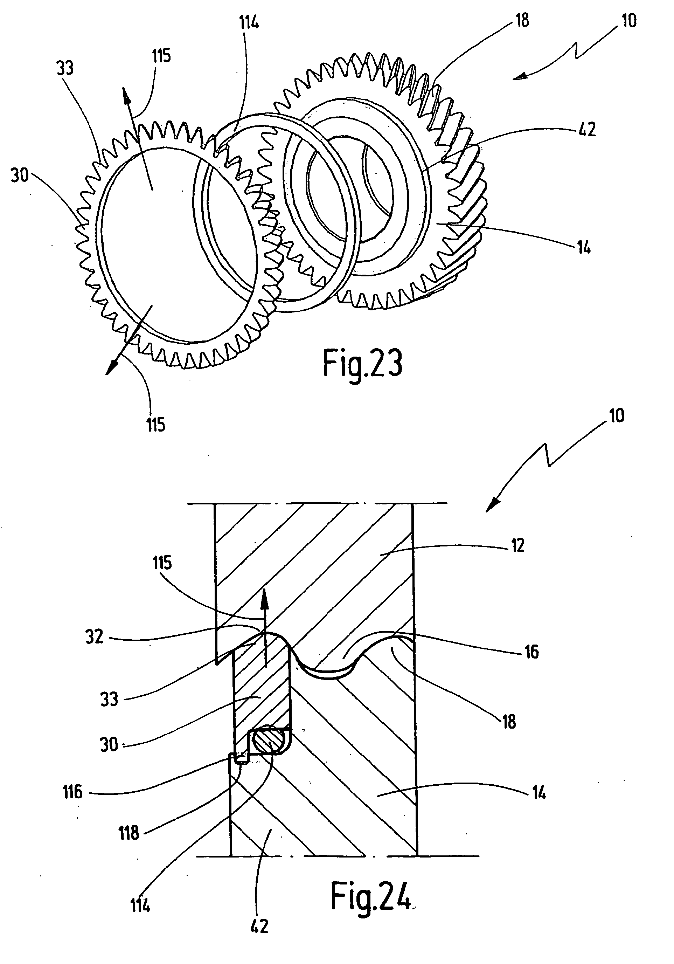

In den Fig. 23 und 24 sind weitere Ausführungsformen von Bauteilpaarungen 10 gezeigt, die hinsichtlich Aufbau und Funktion generell der Ausführungsform der Fig. 21 und 22 entsprechen. Gleiche Elemente sind daher mit gleichen Bezugsziffern versehen.

Anstelle eines Wellfederelementes ist bei der Ausführungsform der Fig. 23 ein Radialfederelement 114 in Form einer "Coil"-Feder (beispielsweise mit im Querschnitt polygonaler Form) vorgesehen. Die Funktionsweise ist jedoch im Wesentlichen identisch wie bei dem Wellfederelement der Fig. 21, 22.

In Fig. 24 ist gezeigt, dass als Radialfederelement 114 eine Gummifeder (nach der Art eines O-Rings) verwendbar ist.

In Fig. 24 ist ferner gezeigt, wie sich das Antirasselbauteil 30 an dem zweiten Bauteil 14 befestigen lässt. Das Antirasselbauteil 30 weist zu diesem Zweck an seinem Innenumfang einen Lagerabschnitt 116 auf, der in eine Radialnut 118 an einen Ringvorsprung 42 des zweiten Bauteils 14 greift. Zwischen dem Lagerabschnitt 116 und dem zweiten Bauteil 14 kann dabei ein Reibeingriff 38 eingerichtet sein.

Der Lagerabschnitt 116 kann in axialer Richtung beispielsweise dünner ausgebildet sein als der Hauptabschnitt des Antirasselbauteils 30, an dem die Antirasselverzahnung 33 ausgebildet ist. Hierdurch kann im eingebauten Zustand zwischen einer radialen Unterseite der so gebildeten Schulter und der radialen Außenseite des Ringvorsprunges 42 ein Raum gebildet sein, der zur Aufnahme (und Lagesicherung) des Radialfederelementes 114 dienen kann.

Es versteht sich, dass eine ähnliche Art von Konstruktion auch bei den Bauteilpaarungen der Fig. 21 bis 23 anwendbar ist.

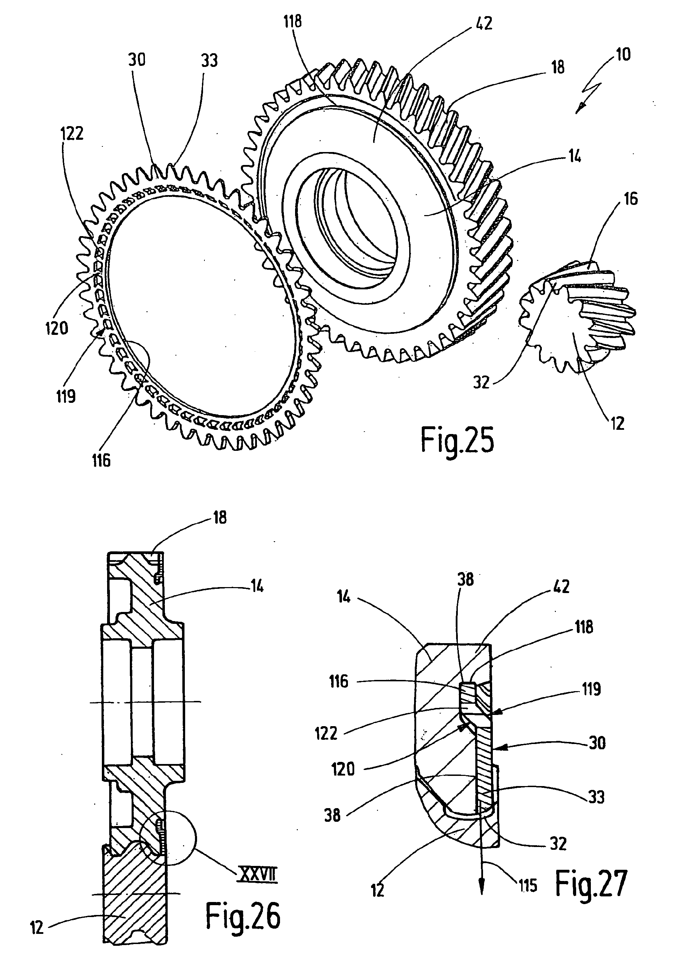

In den Fig. 25 bis 27 ist eine weitere Ausführungsform einer Bauteilpaarung 10 gezeigt, die hinsichtlich Aufbau und Funktion generell den Ausführungsformen der Fig. 21 bis 24 entspricht. Im Folgenden werden lediglich Unterschiede erläutert.

Bei der Bauteilpaarung 10 der Fig. 25 bis 27 weist das Antirasselbauteil 30 radial innerhalb der Antirasselverzahnung 33 und radial außerhalb des Lagerabschnittes 116 einen Radialfederabschnitt 119 auf. Der Radialfederabschnitt 119 ist gebildet durch einen gekröpften Abschnitt 120 zwischen dem Lagerabschnitt 116 und dem radial äußeren Abschnitt des Antirasselbauteils 30, wie es insbesondere in Fig. 27 zu erkennen ist. Die Radialfederwirkung des Radialfederabschnittes 119 ist bei der Ausführungsform der Fig. 25 bis 27 ferner dadurch unterstützt, dass das Antirasselbauteil 30 im Bereich des gekröpften Abschnittes 120 mit einer Vielzahl von umfänglich beabstandeten Schwächungsbereichen 122 ausgebildet ist, die vorliegend als Axialausnehmungen ausgebildet sind. Die Axialausnehmungen können als Axialvertiefungen ausgebildet sein oder als durchgehende Axialausnehmungen, wie es bei 122 in Fig. 27 zu erkennen ist.

Der Schwächungsbereich 122 kann jedoch auch durch Beeinflussung des Materials oder durch andere Beeinflussung der Formgebung im Bereich des gekröpften Abschnittes 120 ausgebildet sein.

Die gekröpfte Form des Antirasselbauteils führt dazu, dass ein Reibeingriff 38 zwischen dem Antirasselbauteil 30 und dem zweiten Bauteil 14 zum einen an den aufeinander zu weisenden axialen Stirnseiten eingerichtet sein kann, wie es in Fig. 27 dargestellt ist. Ein solcher Reibeingriff 38 kann jedoch auch im Bereich des Eingriffs des Lagerabschnittes 116 in die Radialnut 118 des Ringvorsprunges 42 eingerichtet sein, wie es in Fig. 27 ebenfalls dargestellt ist.

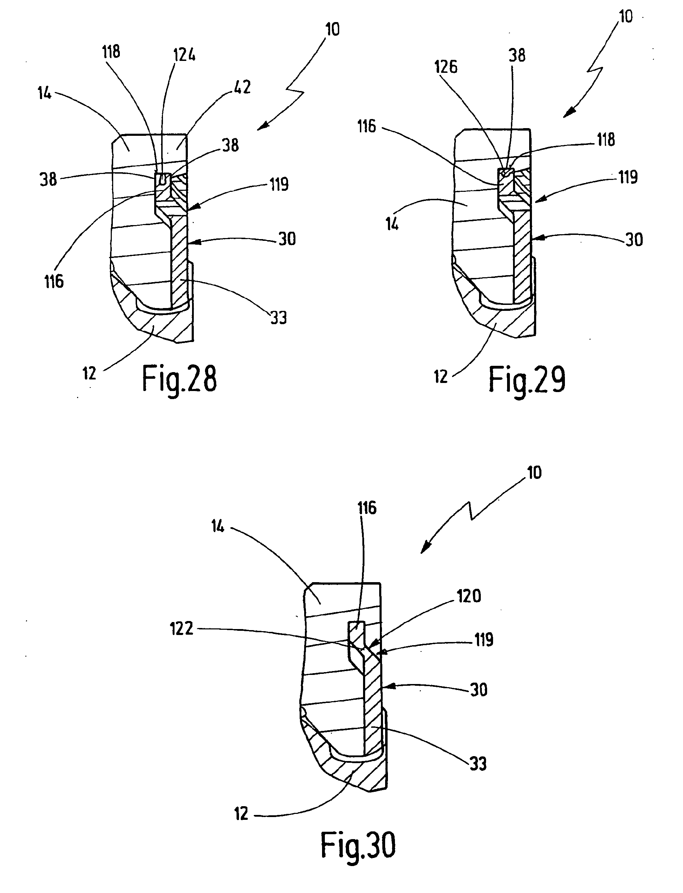

Fig. 28 zeigt eine Abwandlung der in den Fig. 25 bis 27 gezeigten Bauteilpaarung 10, wobei der Lagerabschnitt 116 an seiner radial inneren Seite mit einer Radialnut 124 ausgebildet ist. Die Breite der Radialnut 118 in dem Ringvorsprung 42 und die Breite des Lagerabschnittes 116 im Bereich der Radialnut 124 sind so aneinander angepasst, dass der Lagerabschnitt 116 in axialer Richtung in der Radialnut 118 verspannt ist. Die verbleibenden Ringstege drücken in axialer Richtung nach außen, so dass ein Reibeingriff 38 zwischen dem Antirasselbauteil 30 und dem zweiten Bauteil 14 an axialen Seitenwänden der Radialnut 118 ausgebildet wird.

In Fig. 29 ist eine weitere Abwandlung der Bauteilpaarung 10 der Fig. 25 bis 27 gezeigt. Bei dieser Ausführungsform ist der Lagerabschnitt 116 mit einem Reibbelag 126 versehen, der beispielsweise an dem radialen Innenumfang des Lagerabschnittes 116 ausgebildet sein kann. Der Reibbelag 126 kann den Reibeingriff zwischen dem Antirasselbauteil 30 und dem zweiten Bauteil 14 unterstützen, insbesondere die Reibkraft erhöhen.

In Fig. 30 ist eine weitere Abwandlung der Bauteilpaarung 10 der Fig. 25 bis 27 dargestellt.

Bei der Bauteilpaarung 10 der Fig. 30 ist der Schwächungsbereich 122 nicht durch Axialausnehmungen gebildet wie in den vorherigen Ausführungsformen. Vielmehr ist der Schwächungsbereich 122 dadurch gebildet, dass das Antirasselbauteil 30 im Bereich des gekröpften Abschnittes 120 mit einer geringeren Materialstärke ausgebildet ist.

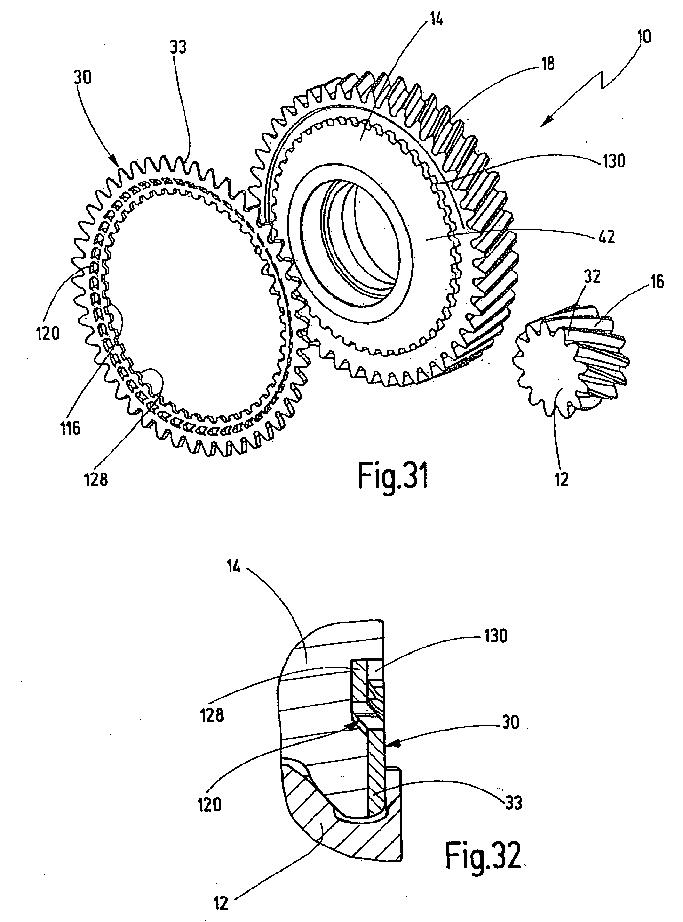

In den Fig. 31 und 32 ist eine weitere Ausführungsform einer Bauteilpaarung 10 gezeigt, die hinsichtlich Aufbau und Funktionsweise generell der Bauteilpaarung der Fig. 25 bis 27 entspricht.

Bei der Bauteilpaarung 10 der Fig. 31 und 32 ist anstelle eines Reibeingriffes 38 zwischen dem Antirasselbauteil 30 und dem zweiten Bauteil 14 vorgesehen, das Antirasselbauteil 30 und das zweite Bauteil 14 in Antriebsrichtung formschlüssig miteinander zu verbinden. Zu diesem Zweck ist an dem Innenumfang des Antirasselbauteils 30 ein Formschlussabschnitt 128 (beispielsweise nach der Art einer Keilnutverzahnung) ausgebildet. In entsprechender Weise ist an dem Außenumfang des Ringvorsprunges 42 ein Formschlussabschnitt 130 ausgebildet, auf den das Antirasselbauteil 30 aufgeschoben werden kann.

Diese Ausgestaltung kann insbesondere dann hinreichend sein, wenn der Reibeingriff 38 zwischen dem Antirasselbauteil 30 und dem zweiten Bauteil 14 nicht hinreichend ist, um im stationären Zustand einen Reibschluss zu gewährleisten (so dass das Antirasselbauteil 30 im stationären Zustand ohne Wirkungsgradverlust von dem zweiten Bauteil 14 in Antriebsrichtung mitgenommen wird).

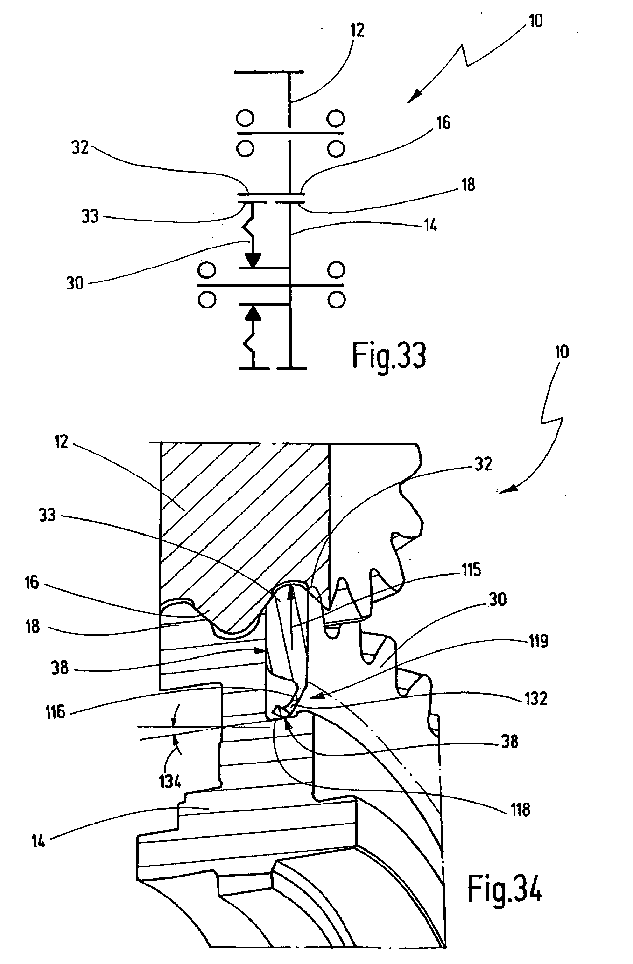

In Fig. 33 ist in schematischer Form eine weitere Bauteilpaarung 10 gezeigt, die hinsichtlich Aufbau und Funktionsweise einer der Ausführungsformen der Fig. 21 bis 32 entspricht.

Bei dieser Ausführungsform ist, wie auch bei manchen der oben beschriebenen Ausführungsformen, zur Realisierung der Antirasselfunktion neben den zwei Bauteilen 12, 14 nur ein weiteres Bauteil vorgesehen, nämlich das Antirasselbauteil 30.

Dieses ist in einer Ebene parallel zu dem zweiten Bauteil 14 vorgesehen und erfüllt vorzugsweise wenigstens eine, insbesondere jedoch sämtliche der folgenden Funktionen:
- es erfolgt ein Spielausgleich zum Gegenzahnrad 12,
- es wird eine radiale und/oder tangentiale (d.h. in Antriebsrichtung) Elastizität realisiert,
- es wird eine axiale Fixierung realisiert und
- es wird im stationären Zustand ein Reibschluss zwischen dem Antirasselbauteil 30 und dem zweiten Bauteil 14 realisiert (oder ggf. ein Formschluss).

Fig. 34 zeigt eine weitere Ausführungsform einer Bauteilpaarung 10, die generell hinsichtlich Aufbau und Funktion den oben beschriebenen Ausführungsformen 21 bis 30 und 33 entspricht. Im Folgenden werden lediglich Unterschiede erläutert.

Das Antirasselbauteil 30 weist einen radial äußeren Ringabschnitt auf, an dessen Außenumfang die Antirasselverzahnung 33 ausgebildet ist, die mit der Antirasselverzahnung 32 des ersten Bauteils 12 in Eingriff steht. An dem radial inneren Abschnitt des Antirasselbauteils 30 ist ein gebogener Abschnitt 132 ausgebildet, der eine deutlich geringere Materialstärke aufweist als der radial äußere Abschnitt. Der gebogene Abschnitt 132 erstreckt sich von der dem zweiten Bauteil 14 abgewandten Axialseite des Antirasselbauteils 30 zu dem zweiten Bauteil 14 hin und beinhaltet einen Abschnitt, der an einer radial äußeren Fläche der Radialnut 118 anliegt. Die radial äußere Fläche der Radialnut 118 ist gegenüber der Längsrichtung geneigt, wie es bei 134 gezeigt ist, und zwar in Richtung nach radial innen, so dass durch den Reibeingriff 38 zwischen dem gebogenen Abschnitt 132 und der Radialnut 118 eine Axialkraft auf das Antirasselbauteil 30 ausgeübt wird. Hierdurch gelangt eine dem zweiten Bauteil 12 zugewandte Axialseite des Antirasselbauteils 30 in Reibeingriff 38 mit einer entsprechenden Fläche des zweiten Bauteils 14.

Der gebogene Abschnitt 132 bildet ferner einen Radialfederabschnitt 119, so dass die Antirasselverzahnung 33 mit einer Radialkraft 115 in die Antirasselverzahnung 32 des ersten Bauteils 12 gedrückt wird.

Ferner kann ein Reibeingriff 38 auch zwischen dem gebogenen Abschnitt 132 und der Radialnut 118 eingerichtet sein, wie es in Fig. 34 gezeigt ist.

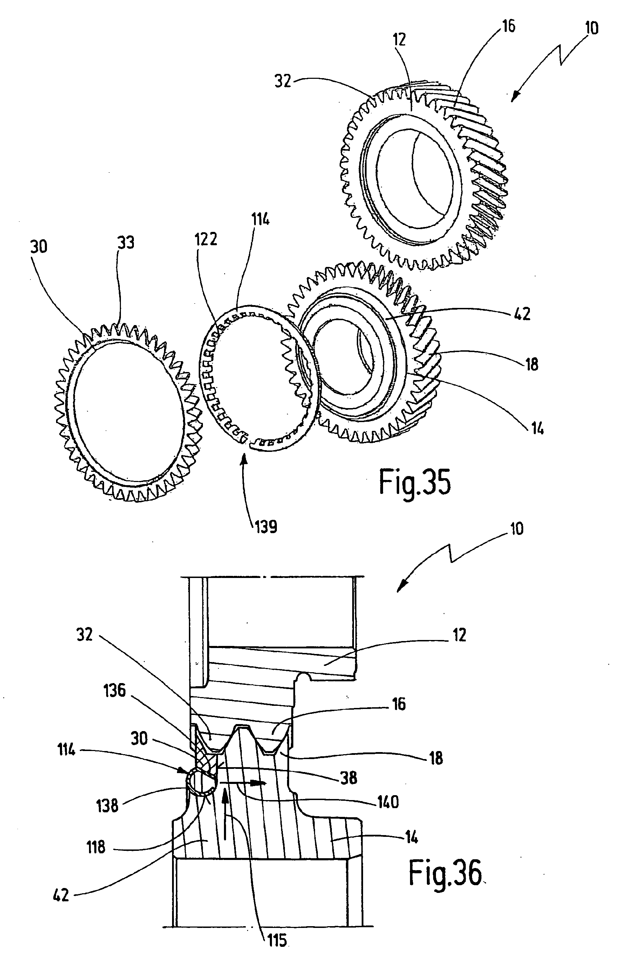

In den Fig. 35 und 36 ist eine weitere Ausführungsform einer Bauteilpaarung 10 gezeigt, die hinsichtlich Aufbau und Funktion generell den oben beschriebenen Ausführungsformen der Fig. 21 bis 24 entspricht. Im Folgenden werden lediglich Unterschiede hierzu erläutert.

Die Bauteilpaarung 10 weist ein Radialfederelement 114 in der Form eines an einer Stelle geöffneten Ringfederelementes auf, das insbesondere aus einem Metall wie einem Federstahl hergestellt ist.

Das Ringfederelement 114 ist zwischen dem radialen äußeren Umfang eines Ringvorsprungs 42 des zweiten Bauteils 14 und dem Innenumfang des Antirasselbauteils 30 angeordnet.

Das Radialfederelement 114 weist einen Schrägabschnitt 136 auf, der an einer entsprechenden schrägen Fläche am Innenumfang des Antirasselbauteils 30 anliegt. An der von dem zweiten Bauteil 14 weg weisenden Seite des Schrägabschnittes 136 ist ein Bogenabschnitt 138 angeformt, der sich um 90° bis 270°, insbesondere im Bereich von 180°, im Wesentlichen einer Kreisform folgend zu dem zweiten Bauteil 14 zurückerstreckt. Der Bogenabschnitt 138 weist folglich an seiner radial inneren Seite eine Halbtorusform auf. Mit dieser abgerundeten Form liegt der Innenumfang des Radialfederelementes 114 in einer entsprechend konkav ausgebildeten Radialnut 118 des Ringvorsprungs 42.

Wie es in Fig. 35 gezeigt ist, kann der Bogenabschnitt 136 über den Umfang verteilt mit einer Mehrzahl von Ausnehmungen ausgebildet sein, die einen Schwächungsbereich 122 bilden.

Das Radialfederelement 114 weist etwa eine Ringstruktur auf, die vorzugsweise unterbrochen ist, wie es in Fig. 35 bei 139 gezeigt ist.

Im montierten Zustand (siehe Fig. 36) liegt der Bogenabschnitt 138 in der konkav ausgeformten Radialnut 118, so dass das Radialfederelement 114 in axialer Richtung fixiert ist. Der Schrägabschnitt 136 liegt am Innenumfang des Antirasselbauteils 30 an. Der Schrägabschnitt 136 erstreckt sich dabei radial schräg nach innen, so dass das Antirasselbauteil 30 mittelbar über das Radialfederelement 114 axial an dem zweiten Bauteil 14 fixiert wird.

Ferner übt das Radialfederelement 114 eine Radialkraft 115 auf das Antirasselbauteil 30 aus, mit den oben bereits beschriebenen Vorteilen. Aufgrund des Schrägabschnittes 136 übt das Radialfederelement 114 auf das Antirasselbauteil 30 auch eine Axialkraft 140 aus, die dazu verwendet werden kann, um den Reibeingriff 38 zwischen dem Antirasselbauteil 30 und dem zweiten Bauteil 14 zu erhöhen.

Wie oben beschrieben, weist das Radialfederelement 114 eine Hohltorusform mit einer Unterbrechung 139 auf, wobei eine radial äußere Seite der Hohltorusform mit dem Schrägabschnitt 136 ausgebildet ist.

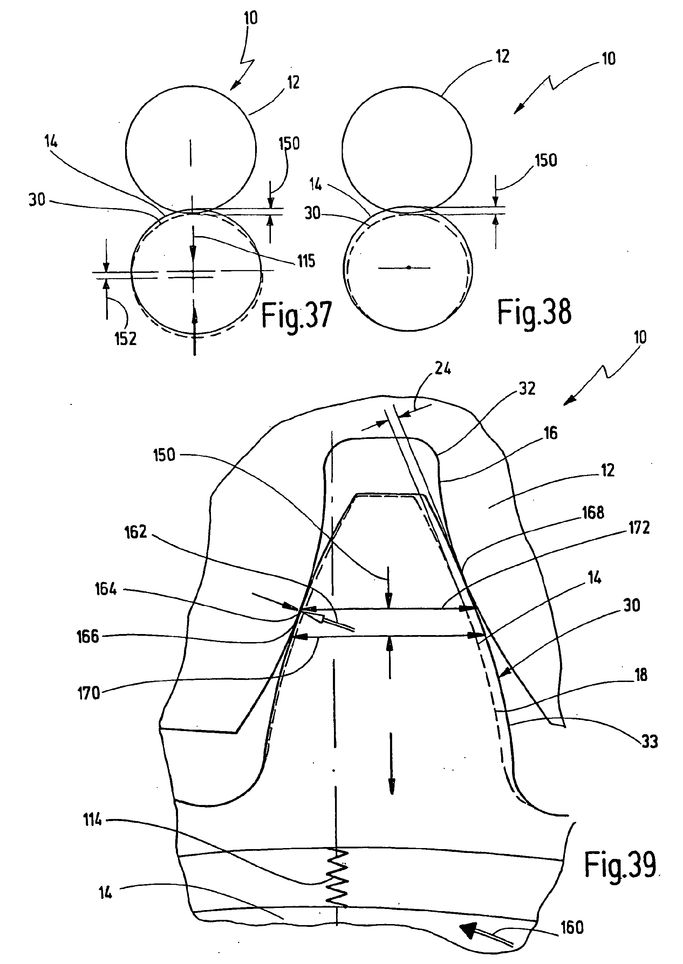

In den Fig. 37 und 38 sind in schematischer Form Bauteilpaarungen gezeigt, bei denen das Antirasselbauteil 30 in radialer Richtung 115 elastisch auslenkbar ist. In

Fig. 37 ist dabei eine Ausführungsform gezeigt, bei der das Antirasselbauteil 30 insgesamt starr ausgebildet ist und radialelastisch gelagert ist. Beispielsweise aufgrund einer größeren Zahndicke (siehe unten) wird das Antirasselbauteil 30 dabei in radialer Richtung 115 aus der Antirasselverzahnung 32 des ersten Bauteils herausgedrückt. Hierdurch ergibt sich zwischen den Verzahnungen im Bereich des Zahneingriffs ein Radialversatz 150.

Da das Antirasselbauteil 30 im Wesentlichen starr ausgebildet ist, wird dieses in Bezug auf das zweite Bauteil 40 insgesamt exzentrisch versetzt, so dass auch deren Mittelpunkte radial versetzt sind, wie es bei 152 gezeigt ist.

In Fig. 38 ist eine alternative Ausführungsform gezeigt, bei der das Antirasselbauteil 30 beispielsweise selbst elastisch ausgebildet ist. Hierdurch ergibt sich im Bereich des Zahneingriffs wiederum ein Radialversatz 150, wohingegen auf der radial gegenüberliegenden Seite ein solcher Radialversatz nicht gegeben sein muss.

In Fig. 39 ist in schematischer Form eine bevorzugte Ausführungsform einer Bauteilpaarung 10 gezeigt. Dabei wird beispielsweise das zweite Antirasselbauteil 14 mit einer Antriebskraft 160 in Antriebsrichtung angetrieben. Dabei liegt eine Flanke der zweiten Bauteilverzahnung 18 an einer Flanke der ersten Bauteilverzahnung 16 an. Dort wird eine Antriebskraft 162 auf das erste Bauteil 12 übertragen. Dies findet an einem Ort 164 des Zahneingriffs zwischen den Verzahnungen 16, 18 statt. In Fig. 38 ist ferner das Zahnflankenspiel 24 zwischen den Verzahnungen 16, 18 gezeigt.

Die Antirasselverzahnung 33 des Antirasselbauteils 30 ist hingegen so ausgebildet, dass sie mit der ersten Antirasselverzahnung 32 des ersten Bauteils 12 in einem Zweiflanken-Wälzeingriff steht. Dabei findet ein Zahneingriff zwischen diesen Verzahnungen zum einen an einem Ort 166 statt, der beispielsweise mit dem Ort 164 zusammenfallen kann. Zum anderen berühren sich die Verzahnungen 33, 32 auch an einer gegenüberliegende Flanke, was bei 168 gezeigt ist.

Die Zähne der zweiten Antirasselverzahnung 32 sind so ausgebildet, dass sie eine Zahndicke 170 aufweisen, die größer ist als eine Zahnlücke 172 der ersten Antirasselverzahnung 32. Dies führt dazu, dass der Zahn über die Zahneingriffe 166, 168 in radialer Richtung 115 aus der ersten Antirasselverzahnung 32 herausgedrückt wird, und zwar gegen die Kraft eines schematisch dargestellten Radialfederelementes. Die hierdurch bedingte radiale Auslenkung ist in Fig. 38 wiederum mit 150 dargestellt. In Bezug auf Fig. 38 ist anzumerken, dass die Differenz zwischen der Zahndicke 170 und der Zahnlücke 172 übertrieben vergrößert dargestellt ist, um den Sachverhalt deutlicher darzustellen. Demzufolge ist auch der Radialversatz 150 bereits übertrieben dargestellt. In der Regel ist dieser kleiner als 500 µm.

Die Antirasselverzahnungen 32, 33 sind als Evolventenverzahnungen ausgebildet. Die Angaben der Zahndicke und der Zahnlücke beziehen sich dabei nach der üblichen Nomenklatur auf die Zahndicke im sogenannten Teilkreis.

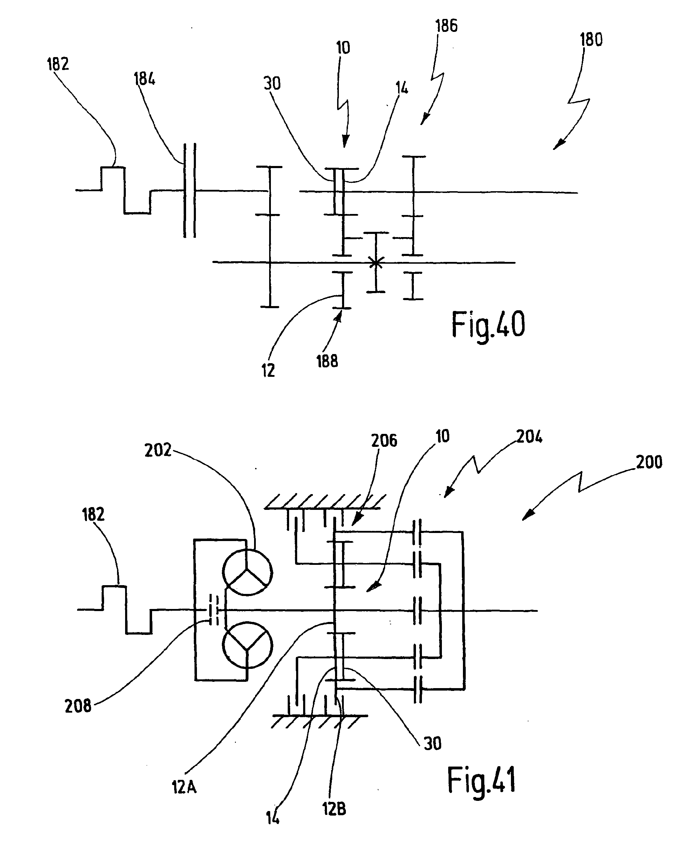

In den Fig. 40 und 41 sind beispielhafte Antriebsstränge für Kraftfahrzeuge gezeigt, in denen die erfindungsgemäße Bauteilpaarung zum Einsatz kommen kann.

Fig. 40 zeigt in schematischer Form einen Antriebsstrang 180 für ein Kraftfahrzeug, der einen Verbrennungsmotor 182 und eine Anfahrkupplung 184 aufweist. Ferner beinhaltet der Antriebsstrang 180 ein in Vorgelegebauweise ausgeführtes Stufengetriebe 186, das in üblicher Weise eine Mehrzahl von Radsätzen 188 beinhaltet. Die Radsätze 188 sind mittels Schaltkupplungen (Synchronkupplungen) schaltbar, um unterschiedliche Gangstufen des Stufengetriebes 186 ein- bzw. auszulegen. Die Radsätze 188 beinhalten in der Regel einen Konstanten-Radsatz und eine Mehrzahl von Radsätzen, die jeweils ein Losrad und ein oder mehrere Festräder beinhalten.

In Fig. 40 ist ferner beispielhaft dargestellt, dass wenigstens einer der Radsätze 188 eine Bauteilpaarung 10 gemäß der vorliegenden Erfindung aufweist. Der Radsatz 188 beinhaltet ein erstes Bauteil 12 in Form eines Losrades, das mittels einer Synchronkupplung schaltbar ist, und ein zweites Bauteil 14 in Form eines Festrades. Dem Festrad 14 ist dabei ein Antirasselbauteil 30 der erfindungsgemäßen Art zugeordnet.

Fig. 41 zeigt eine alternative Ausführungsform eines Antriebsstranges 200 für ein Kraftfahrzeug, der einen Antriebsmotor 182, einen hydrodynamischen Wandler 202 und ein Planetengetriebe 204 beinhaltet. Das Planetengetriebe 204 beinhaltet wenigstens einen Planetenradsatz 206, der durch nicht näher bezeichnete Kupplungen bzw. Bremsen schaltbar ist. Dabei bilden beispielsweise die Planetenräder des Planetenradsatzes 206 zweite Bauteile 14 im Sinne einer erfindungsgemäßen Bauteilpaarung. Das Sonnenrad ist als erstes Bauteil 12A ausgebildet, das Hohlrad ist ebenfalls als erstes Bauteil 12B ausgebildet. Die Planetenräder (die zweiten Bauteile) 14 stehen sowohl mit dem Sonnenrad 12A als auch mit dem Hohlrad 12B in Eingriff. Dabei kann wenigstens einem der Planetenräder 14 ein Antirasselbauteil 30 gemäß der vorliegenden Erfindung zugeordnet sein.

Bei dem Antriebsstrang 180 der Fig. 40 ist es vorteilhaft, dass der Antriebsstrang zwischen dem Antriebsmotor 112 und der Kupplung 184 kein Zweimassen-Schwungrad beinhalten muss. Allerdings kann die Kupplung 184 selbst mit einem Torsionsdämpfer üblicher Bauart ausgestaltet sein, der eine zwei- oder mehrstufige Kennlinie beinhalten kann.

Bei dem Antriebsstrang 200 ist es vorteilhaft, dass eine Überbrückungskupplung 208 zum Überbrücken des hydrodynamischen Wandlers 202 häufiger bzw. früher zugeschaltet werden kann, so dass der Wirkungsgrad des Antriebsstranges 200 gesteigert werden kann.

Die oben beschriebenen Ausführungsformen von Bauteilpaarungen erfüllen wenigstens einen der folgenden Vorteile:

Das Rasselproblem an einer spielbehafteten Bauteilpaarung wird durch nur ein Bauteil in einer Ebene gelöst.

Ein Spielausgleich erfolgt entweder durch eine Profilverschiebung, durch dickere Zähne der Antirasselverzahnung 33 des Antirasselbauteils 30, durch eine kleinere Zahnlücke der Antirasselverzahnung 32, durch radiales Eindrücken des Antirasselbauteils 30 in die Antirasselverzahnung 32 des ersten Bauteils, durch Volumenvergrößerung des Antirasselbauteils, bis ein Spielausgleich ("tight mesh") erfolgt, durch elastische Abfederung mittels Federbereichen, die in das Antirasselbauteil 30 integriert sind, beispielsweise in radialer und/oder tangentialer (d.h. in Antriebsrichtung) Richtung, durch Reibeingriff des Antirasselbauteils 30 in axialer oder radialer Richtung gegenüber dem zweiten Bauteil 14, wobei der Reibeingriff direkt oder indirekt erfolgen kann, und/oder durch eine axiale oder radiale Fixierung des Antirasselbauteils 30 an dem zweiten Bauteil 14.

Dem Antirasselbauteil 30 kann ein Komplementär-Antirasselbauteil zugeordnet sein, und zwar entweder durch form- oder kraftschlüssige Verbindung. Das Komplementär-Antirasselbauteil kann beispielsweise aus einem anderen Material sein als das Antirasselbauteil. Beispielsweise kann das Komplementär-Antirasselbauteil 90 aus Kunststoff (z.B. Polyimid) ausgebildet sein, wohingegen das Antirasselbauteil 30 selbst aus Metall hergestellt ist. Hierdurch kann der Umfang der Verwendung von Metall (Stahl) minimiert werden, um Kosten und Gewicht zu verringern.

Bei der Verwendung von Metall für das Antirasselbauteil ist anstelle von Stahl auch die Verwendung von Aluminium (oder einem anderen Leichtmetall) denkbar. Bei der Ausführungsform der Fig. 9/10 ist das Antirasselbauteil 30 bevorzugt aus Kunststoff oder einem Leichtmetall ausgebildet, da hierdurch eine gewünschte Wärmedehnungskompensation möglich ist.

In einem Getriebe mit mehreren Radsätzen ist eine Antirasselmaßnahme wie oben bevorzugt an wenigstens einem, vorzugsweise jedem der Radsätze ausgebildet. Hierbei ist es bevorzugt, wenn der Antriebsstrang, in dem das Getriebe verwendet wird, an der Ausgangsseite des Verbrennungsmotors kein Zweimassen-Schwungrad aufweist. Für diesen Fall ist es bevorzugt, wenn nicht nur die Radsätze mit einer Antirasselmaßnahme ausgebildet sind, wie oben beschrieben, sondern wenn auch Rasselschwingungen der Synchronringe im Getriebe gemindert werden, beispielsweise durch Einclipsen von Wellfedern zwischen Kupplungskörper und Synchronring.

Neben der Anwendung in Radsätzen von Getrieben sind auch folgende Anwendungen generell denkbar: Motorsteuerräder, Industriegetriebe, Pumpen, Zahnradpumpen, Werkzeugmaschinen, Haushaltsgeräte, Lifescience-Produkte wie elektrische Zahnbürsten, Küchenmaschinen. Die Verwendung in Getrieben ist nicht auf die Verwendung in Personenkraftwagen beschränkt, sondern auch auf die Verwendung in Getrieben für Nutzfahrzeuge abstimmbar.

Hinsichtlich der Dimensionierung der erfindungsgemäßen Bauteilpaarungen ist ferner Folgendes anzumerken. In jedem Anwendungsfall sind die Dimensionierungen bzw. Geometrien gemäß den geforderten physikalischen Wirkprinzipien jeweils individuell durch brauchbare Rechenansätze und - sofern diese nicht hinreichend bekannt oder vorhanden sind - durch empirische Versuchsabstimmungen genau so festzulegen, dass die geforderte Funktion der Funktionsträger/Bauteile in jedem denkbaren Funktionsfall voll und wie gewünscht - wie oben beschrieben - erfüllt wird.

Die benannten Zahlenwerte gelten insbesondere für ein Schaltgetriebe eines Personenkraftfahrzeuges mit einem Hubraum von 1,6 Litern und einem maximal übertragbaren Moment von 217 Nm. Der Hauptachsabstand beträgt dabei zwischen Antriebswelle und Nebenwelle 72 mm. Jede andere Auslegung der Bauteilpaarung muss individuell neu abgestimmt werden. Dabei gilt näherungsweise, dass die Parameter Drehzahl, Amplitude der Winkelbeschleunigung und Massenträgheitsmomente in einem rationalen Verhältnis linear die benannten Kräfte und Federsteifigkeiten der Bauteilpaarung beeinflussen. Vereinfacht ausgedrückt gilt also: doppelte Drehzahl oder doppelte Amplitude der Winkelbeschleunigung oder doppeltes Massenträgheitsmoment des durch die Bauteilpaarung am Klappern und Rasseln zu hindernden Losteiles muss mit einer Verdoppelung der Federkräfte und Steifigkeiten erreicht werden. Umgekehrt gilt das Gleiche auch bei einer Halbierung der benannten Parameter. Für die Zahndickenaufweitung des Mikrozahnrades gilt (zumindest bei dem zweiten Aspekt der Erfindung) generell unabhängig von der Baugröße und Bauform der Getriebe: die Zahndicke des Mikrozahnrades muss immer größer sein als die jemals durch Fertigungsschwankungen, Wärmedehnung oder mechanische Deformation auftretende Zahnlücke des Gegenrades, damit immer sicher gewährleistet ist, dass durch die Zweiflankenwälzpaarung des Mikrozahnrades jegliches Drehflankenspiel zum Gegenrad zu 100 % eliminiert ist.

## Patentansprüche

1. Bauteilpaarung (10) aus einem ersten Bauteil (12) mit einer ersten Bauteilverzahnung (16) und einem zweiten Bauteil (14) mit einer zweiten Bauteilverzahnung (18), die mit der ersten Bauteilverzahnung (16) in Eingriff steht, um über die Bauteilverzahnungen (16, 18) eine Antriebskraft in einer Antriebsrichtung (20) übertragen zu können, wobei dem ersten Bauteil (12) ferner eine erste Antirasselverzahnung (32) zugeordnet ist, wobei an dem zweiten Bauteil (14) ein Antirasselbauteil (30) befestigt ist, das eine zweite Antirasselverzahnung (33) aufweist, die mit der ersten Antirasselverzahnung (32) in Eingriff steht,
**dadurch gekennzeichnet, dass**
das Antirasselbauteil (30) gegenüber dem zweiten Bauteil (14) in Antriebsrichtung (20) versetzbar gelagert ist, und wobei dem zweiten Bauteil (14) und dem Antirasselbauteil (30) jeweils ein Reibabschnitt (44, 46) zugeordnet ist, die in Reibeingriff (38) miteinander stehen.

2. Bauteilpaarung nach Anspruch 1, wobei das Zahnflankenspiel (34) zwischen den Antirasselverzahnungen (32, 33) kleiner ist als das Zahnflankenspiel (24) zwischen den Bauteilverzahnungen (16, 18).

3. Bauteilpaarung nach Anspruch 1 oder 2, wobei die Reibabschnitte (44, 46) radial ausgerichtet sind.

4. Bauteilpaarung nach Anspruch 3, wobei die Reibabschnitte (44, 46) im Bereich von seitlichen Stirnflächen des zweiten Bauteils (14) bzw. des Antirasselbauteils (30) ausgebildet sind.

5. Bauteilpaarung nach einem der Ansprüche 1 bis 4, wobei das zweite Bauteil (14) und das Antirasselbauteil (30) elastisch gegeneinander verspannt sind, um die Reibabschnitte (44, 46) aneinander anzudrücken.

6. Bauteilpaarung nach Anspruch 5, wobei das zweite Bauteil (14) und das Antirasselbauteil (30) in axialer Richtung gegeneinander verspannt sind.

7. Bauteilpaarung nach einem der Ansprüche 1 bis 6, wobei das Antirasselbauteil (30) gegen das zweite Bauteil (14) mittels einer Tellerringfeder (58) angedrückt wird, die sich an einem Federring (54) abstützt.

8. Bauteilpaarung nach einem der Ansprüche 1 bis 7, wobei das Antirasselbauteil (30) in radialer Richtung (115) elastisch verformbar bzw. gelagert ausgebildet ist.

9. Bauteilpaarung nach Anspruch 8, wobei zwischen dem Antirasselbauteil (30) und dem zweiten Bauteil (14) ein Radialfederelement (114) angeordnet ist, mittels dessen das Antirasselbauteil (30) in radialer Richtung (115) zu dem ersten Bauteil (12) hin vorgespannt ist.

10. Bauteilpaarung nach einem der Ansprüche 1 bis 9, wobei das Antirasselbauteil (30) so gelagert ist, dass es im Bereich des Zahneingriffs radial ausgelenkt wird.

11. Bauteilpaarung nach einem der Ansprüche 1 bis 10, wobei zwischen den Antirasselverzahnungen (32, 33) ein Zwei-Flanken-Wälzkontakt eingerichtet ist.

12. Bauteilpaarung nach einem der Ansprüche 1 bis 11, wobei die Zähne von einer der Antirasselverzahnungen eine Zahndicke aufweisen, die größer oder gleich der Zahnlücke der Zähne der anderen Antirasselverzahnung (32) ist.

13. Bauteilpaarung nach Anspruch 12, wobei die Zahndicke um 20 µm - 50 µm größer ist als die Zahnlücke.

14. Bauteilpaarung nach einem der Ansprüche 1 bis 13, wobei die Zahnteilung der Bauteilverzahnungen und der jeweils zugeordneten Antirasselverzahnungen identisch ist.

15. Getriebe mit wenigstens einer Bauteilpaarung nach einem der Ansprüche 1 bis 14.

## Claims

1. Component pairing (10) comprising a first component (12) with a first component toothing (16) and comprising a second component (14) with a second component toothing (18) which is in engagement with the first component toothing (16) in order to be able to transmit a drive force in a drive direction (20) via the component toothings (16, 18), with the first component (12) also being assigned a first anti-rattle toothing (32), with an anti-rattle component (30) being fastened to the second component (14), which anti-rattle component (30) has a second anti-rattle toothing (33) which is in engagement with the first anti-rattle toothing (32),
**characterized in that**
the anti-rattle component (30) is mounted so as to be displaceable relative to the second component (14) in the drive direction (20), and with the second component (14) and the anti-rattle component (30) being assigned in each case one friction section (44, 46), which friction sections (44, 46) are in frictional engagement (38) with one another.

2. Component pairing according to Claim 1, with the tooth flank play (34) between the anti-rattle toothings (32, 33) being smaller than the tooth flank play (24) between the component toothings (16, 18).

3. Component pairing according to Claim 1 or 2, with the friction sections (44, 46) being aligned radially.

4. Component pairing according to Claim 3, with the friction sections being formed in the region of lateral end faces of the second component (14) and the anti-rattle component (30).

5. Component pairing according to one of Claims 1 to 4, with the second component (14) and the anti-rattle component (30) being braced elastically against one another in order to press the friction sections (44, 46) against one another.

6. Component pairing according to claim 5, wherein the second component (14) and the anti-rattle component (30) are braced against one another in the axial direction.

7. Component pairing according to one of Claims 1 to 6, with the anti-rattle component (30) being pressed against the second component (14) by means of an annular plate spring (58) which is supported on a spring ring (54).

8. Component pairing according to one of Claims 1 to 7, with the anti-rattle component (30) being elastically deformable, or elastically mounted, in the radial direction (115).

9. Component pairing according to Claim 8, with a radial spring element (114) being arranged between the anti-rattle component (30) and the second component (14), by means of which radial spring element (114) the anti-rattle component (30) is preloaded towards the first component (12) in the radial direction (115).

10. Component pairing according to one of Claims 1 to 9, with the anti-rattle component (30) being supported such that it is radially deflected in the area of the tooth engagement.

11. Component pairing according to one of claims 1 to 10, wherein a two-flank rolling contact is established between the anti-rattle toothings (32, 33).

12. Component pairing according to one of Claims 1 to 11, with teeth of one of the anti-rattle toothings having a tooth thickness which is greater than or equal to the tooth space of the teeth of the other anti-rattle toothing (32).

13. Component pairing according to claim 12, wherein the tooth thickness is greater than the tooth space by 20 µm to 50 µm.

14. Component pairing according to any of claims 1 to 13, wherein the tooth pitch of the component toothings and of the respective associated anti-rattle toothings is identical.

15. Gearbox having at least one component pairing according to one of Claims 1 to 14.

## Revendications

1. Assemblage de composants (10) composé d'un premier composant (12) doté d'un premier endentement de composant (16) et d'un deuxième composant (14) doté d'un deuxième endentement de composant (18) s'engrenant avec le premier endentement de composant (16), pour pouvoir transmettre une force d'entraînement dans une direction d'entraînement (20) via les endentements de composant (16, 18), un premier endentement anticliquetis (32) étant en outre associé au premier composant (12), un composant anticliquetis (30) étant fixé au niveau du deuxième composant (14), ledit composant anticliquetis comportant un deuxième endentement anticliquetis (33) s'engrenant avec le premier endentement anticliquetis (32), **caractérisé en ce que** le composant anticliquetis (30) est disposé de façon à pouvoir être déplacé par rapport au deuxième composant (14) dans la direction d'entraînement (20) et un segment de frottement (44, 46) étant respectivement associé au deuxième composant (14) et au composant anticliquetis (30), lesdits segments de frottement formant ensemble un engrenage de frottement (38).

2. Assemblage de composants selon la revendication 1, le jeu de flanc de dent (34) prévu entre les endentements anticliquetis (32, 33) étant inférieur au jeu de flanc de dent (24) prévu entre les endentements de composant (16, 18).

3. Assemblage de composants selon la revendication 1 ou 2, les segments de frottement (44, 46) étant orientés dans le plan radial.

4. Assemblage de composants selon la revendication 3, les segments de frottement (44, 46) étant réalisés dans la zone des surfaces frontales latérales du deuxième composant (14) et/ou du composant anticliquetis (30).

5. Assemblage de composants selon l'une quelconque des revendications 1 à 4, le deuxième composant (14) et le composant anticliquetis (30) étant tendus l'un contre l'autre de façon élastique de façon à comprimer les segments de frottement (44, 46) l'un contre l'autre.

6. Assemblage de composants selon la revendication 5, le deuxième composant (14) et le composant anticliquetis (30) étant tendus l'un contre l'autre dans la direction axiale.

7. Assemblage de composants selon l'une quelconque des revendications 1 à 6, le composant anticliquetis (30) étant comprimé contre le deuxième composant (14) à l'aide d'un ressort à disques (58) s'appuyant contre un disque (54).

8. Assemblage de composants selon l'une quelconque des revendications 1 à 7, le composant anticliquetis (30) étant réalisé de façon à être déformable et/ou disposé de façon élastique dans la direction radiale (115).

9. Assemblage de composants selon la revendication 8, un élément de ressort radial (114) étant disposé entre le composant anticliquetis (30) et le deuxième composant (14), à l'aide duquel le composant anticliquetis (30) est précontraint dans la direction radiale (115) en direction du premier composant (12).

10. Assemblage de composants selon l'une quelconque des revendications 1 à 9, le composant anticliquetis (30) étant disposé de telle sorte qu'il est articulé dans le plan radial dans la zone de l'engrenage de dents.

11. Assemblage de composants selon l'une quelconque des revendications 1 à 10, un contact à rouleaux à deux côtés étant prévu entre les endentements anticliquetis (32, 33).

12. Assemblage de composants selon l'une quelconque des revendications 1 à 11, les dents d'un des endentements anticliquetis présentant une épaisseur de dent supérieure ou égale à l'interstice des dents de l'autre endentement anticliquetis (32).

13. Assemblage de composants selon la revendication 12, l'épaisseur de dent faisant de 20 µm à 50 µm de plus que l'interstice de dents.

14. Assemblage de composants selon l'une quelconque des revendications 1 à 13, la répartition des endentements de composant et des endentements anticliquetis respectivement associés étant identique.

15. Engrenage doté d'au moins un assemblage de composants selon l'une quelconque des revendications 1 à 14.
